# EUROPEAN PATENT APPLICATION

(11) **EP 4 539 517 A1**
(43) Date of publication of application: **16.04.2025**
(21) Application number: 23826080.6
(22) Date of filing: 29.05.2023
(51) Int. Cl.: H04W 4/80

(54) **COMMUNICATION METHOD AND APPARATUS**

(30) Priority: 22.06.2022 CN 202210714032
(71) Applicant: Huawei Technologies Co., Ltd., Shenzhen, Guangdong 518129 (CN)
(72) Inventor: HUANG, Kang, Shenzhen, Guangdong 518129 (CN); ZHU, Hualin, Shenzhen, Guangdong 518129 (CN); XU, Yishan, Shenzhen, Guangdong 518129 (CN); LI, Hantao, Shenzhen, Guangdong 518129 (CN)
(74) Representative: Isarpatent
(86) International application number: PCT/CN2023/096809
(87) International publication number: WO 2023/246431

(57) **Abstract**

A communication method and apparatus are provided. The method includes: A first communication apparatus receives a first request, where the first request indicates the first communication apparatus to obtain information about a first tag. The first communication apparatus obtains the information about the first tag based on the first request, where the information about the first tag includes an identifier of the first tag. The first communication apparatus determines a first communication session based on the identifier of the first tag, where the first communication session is used to transmit the information about the first tag. The first communication apparatus sends the information about the first tag by using the first communication session. According to the method, after obtaining the information about the first tag, the first communication apparatus determines the corresponding first communication session for the information about the first tag, so that it can be ensured that the first communication apparatus can effectively and accurately transmit the information about the first tag by using the first communication session.

## Description

### CROSS-REFERENCE TO RELATED APPLICATIONS

This application claims priority to Chinese Patent Application No. 202210714032.2, filed with the China National Intellectual Property Administration on June 22, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With development of internet of things technologies, application scenarios of the internet of things technologies are more extensive, for example,
warehouse/transportation/material/fixed asset management. Usually, the internet of things technology may include a passive or semi-passive internet of things (Passive IoT, P-IoT) technology. To be specific, a node in a network may obtain energy from an environment, to support sensing, transmission, distributed computing, and the like of data in the network.

A passive or semi-passive internet of things architecture may usually include a passive tag or a semi-passive tag, a reader (reader), and a server. The reader (Reader) may read/write a tag (or a radio frequency card) in a wireless radio frequency manner, to identify the tag (or the radio frequency card), and exchange information and data with the tag (or the radio frequency card). The tag (namely, the semi-passive tag) may alternatively store electric energy by obtaining solar energy or other means, and actively send a signal of a specific frequency to the reader. The reader receives information carried in the signal and decodes the information, and further sends decoded information to a central information system for corresponding data processing.

However, in an existing tag read/write manner, when a terminal device is used as a reader, because the reader may be shared by a plurality of enterprises, and enterprise information is not provided by tags, the reader cannot directly establish a user plane channel with a home enterprise server of a target tag. In addition, the reader does not execute different routing policies for enterprise information provided by different tags, and consequently the network cannot identify home enterprises of the tags to provide different communication services for different enterprises.

Therefore, a communication method needs to be urgently provided, to effectively and accurately transmit information about a tag.

### SUMMARY

A communication method and apparatus are provided, to effectively and accurately transmit information about a tag.

According to a first aspect, an embodiment of this application provides a first communication method. The method may be performed by a first communication apparatus. The first communication apparatus may be a reader (or a controller or a chip corresponding to the reader), or may be a terminal device (or a controller or a chip corresponding to the terminal device) that establishes a communication connection to the reader. The terminal device may be, but is not limited to, a computer, a mobile phone, a tablet computer, or another device that can establish a communication connection to the reader. This is not limited. The method specifically includes the following steps: The first communication apparatus receives a first request, where the first request indicates the first communication apparatus to obtain information about a first tag. The first communication apparatus obtains the information about the first tag based on the first request, where the information about the first tag includes an identifier of the first tag. The first communication apparatus determines a first communication session based on the identifier of the first tag, where the first communication session is used to transmit the information about the first tag. The first communication apparatus sends the information about the first tag by using the first communication session.

For example, if the device for requesting to obtain the information about the first tag is an application server of a home enterprise of the first tag, the first communication apparatus may receive the first request from the application server. In addition, the first communication apparatus sends the information about the first tag to the application server by using the first communication session. A specific transmission path used by the first communication apparatus to send the information about the first tag to the application server is not specifically limited in this application.

In the solutions of this application, after obtaining the information about the first tag based on the first request, the first communication apparatus may determine the first communication session specially used to transmit the information about the first tag, so that accuracy of transmitting the information about the first tag by the first communication apparatus can be effectively improved.

In a possible implementation, that the first communication apparatus determines a first communication session based on the identifier of the first tag includes: The first communication apparatus determines the first communication session from at least one communication session based on the identifier of the first tag and first routing policy information, where the first routing policy information includes a correspondence between the identifier of the first tag and an identifier of the first communication session.

The first routing policy information may be improved according to an existing user equipment route selection policy (UE route selection policy, URSP), that is, the correspondence between the identifier of the tag and the identifier of the communication session is added to the URSP policy, so that the first communication apparatus may further determine the appropriate communication session based on the identifier of the tag.

It needs to be noted that, the first routing policy information may further include a correspondence between the identifier of the first tag and address information and/or port number information of the target server. Therefore, the first communication apparatus may further determine, based on the correspondence included in the first routing policy information, the address information and/or the port number information of the target server that correspond/corresponds to the first tag, and further determine, based on a correspondence between the address information and/or the port number information of the server and the communication session (which may alternatively be included in the first routing policy information or stored in the first communication apparatus), the first communication session corresponding to the address information and/or the port number information of the target server. A specific manner in which the first communication apparatus determines the first communication session based on the first routing policy information is not limited in this application.

In this implementation, because the first routing policy information includes the identifier of the first tag and the correspondence between the identifier of the first tag and the identifier of the first communication session, the first communication apparatus can accurately determine, based on the first routing policy information, the first communication session used to transmit the information about the first tag, thereby improving accuracy of transmitting the information about the first tag.

In a possible implementation, before that the first communication apparatus receives a first request, the method further includes: The first communication apparatus establishes at least one communication session, where the at least one communication session includes the first communication session. The first communication apparatus establishes at least one piece of routing policy information, where each piece of routing policy information includes a correspondence between a corresponding tag and an identifier of a communication session.

In this implementation, before the first communication apparatus receives the request used indicating to obtain the information about the first tag, the first communication apparatus needs to establish at least one communication session, where the first communication session includes the first communication session; and establishes the corresponding routing policy information, so that the routing policy information includes the correspondence between the corresponding tag and the identifier of the communication session. Therefore, the first communication apparatus establishes at least one effective communication path for transmitting the information about the tag and the corresponding routing policy information. Subsequently, the first communication apparatus may select, from the at least one communication session based on the identifier of the first tag and the corresponding routing policy, the appropriate communication session for transmitting the information about the first tag, so that validity and accuracy of transmitting the information about the first tag can be ensured.

In the solutions of this application, because paths for transmitting the information about the tag by the first communication apparatus may be different, that the first communication apparatus establishes the first communication session may include but is not limited to the following manners.

In a first implementation, that the first communication apparatus establishes the first communication session includes: The first communication apparatus sends a first session request message, where the first session request message includes first indication information, and the first indication information indicates home enterprise information of the first tag. The first communication apparatus receives a first response message, where the first response message is used to respond to the first session request message, the first response message includes first target address information and/or first port number information, and the first target address information and/or the first port number information are/is determined based on the first indication information. The first communication apparatus establishes the first communication session based on the first target address information and/or the first port number information, where the first target address information and/or the first port number information are/is used to determine a target server, and the target server is a server of a home enterprise.

For example, for a procedure in which the first communication apparatus establishes the first communication session, refer to an existing PDU session establishment procedure for implementation. Details are not described herein again. However, a difference lies in that in this embodiment of this application, the first communication apparatus includes, in the sent session request message, the first indication information indicating the home enterprise information of the tag. The first target address information and/or the first port number information may be determined by a session management function SMF network element in this procedure based on the first indication information (or the home enterprise information of the first tag), or may be determined by another network element based on the first indication information (or the home enterprise information of the first tag), and are/is then sent to the session management function SMF network element. This is not specifically limited in this application.

The home enterprise information of the tag may be but is not limited to a data network element name DNN and/or network slice selection assistance information (network slice selection assistance information, NSSAI). The first indication information may indicate a DNN and/or NSSAI of a home enterprise of an accessed tag, or the first indication information may be a DNN and/or NSSAI of a home enterprise of the accessed tag. This is not limited in this application. The DNN and/or the NSSAI indicate/indicates network information that is of a target enterprise and that the first communication apparatus requests to establish.

In an implementation, an address and/or the port number information of the target server of the first tag are/is determined based on the home enterprise information of the first tag, so that a communication connection (namely, the first communication session) between the first communication apparatus and the target server of the first tag can be effectively and accurately established.

Based on the first implementation, the first communication apparatus may directly establish the first communication session with the target server. That the first communication apparatus sends the information about the first tag by using the first communication session includes: The first communication apparatus sends the information about the first tag to the target server by using the first communication session.

In this implementation, the first communication apparatus can effectively and accurately send the information about the first tag to the target server by using the first communication session between the first communication apparatus and the target server.

In a second implementation, that the first communication apparatus establishes the first communication session includes: The first communication apparatus sends a second session request message, where the second session request message includes second indication information, and the second indication information indicates home enterprise information of the first tag. The first communication apparatus receives a second response message, where the second response message is used to respond to the second session request message, the second response message includes second target address information and/or second port number information, and the second target address information and/or the second port number information are/is determined based on the second indication information. The first communication apparatus establishes the first communication session based on the second target address information and/or the second port number information, where the second target address information and/or the second port number information are/is used to determine a first user plane function network element, and the first user plane function network element is a user plane network element that provides a service for a home enterprise.

For example, for a procedure in which the first communication apparatus establishes the first communication session, refer to an existing PDU session establishment/modification for implementation. Details are not described herein again. The second target address information and/or the second port number information may be determined by a session management function SMF network element in this procedure based on the second indication information (or the home enterprise information of the first tag), or may be determined by another network element based on the second indication information (or the home enterprise information of the first tag), and are/is then sent to the session management function SMF network element. This is not specifically limited in this application.

The home enterprise information of the tag may be but is not limited to a DNN and/or NSSAI. The second indication information may indicate a DNN and/or NSSAI of a home enterprise of an accessed tag, or the second indication information may be a DNN and/or NSSAI of a home enterprise of the accessed tag. This is not limited in this application. The DNN and/or the NSSAI indicate/indicates network information that is of a target enterprise and that the first communication apparatus requests to establish.

Optionally, the home enterprise information of the tag may be the data network element name DNN.

In the second implementation, address information and/or port information of the first user plane function network element of the first tag are/is determined based on the home enterprise information of the first tag, so that a communication connection (namely, the first communication session) between the first communication apparatus and the first user plane function network element of the first tag can be effectively and accurately established.

Based on the second implementation, the first communication apparatus may establish the first communication session with the first user plane function network element. That the first communication apparatus sends the information about the first tag by using the first communication session includes: The first communication apparatus sends the information about the first tag to the first user plane function network element by using the first communication session.

In the second implementation, the first communication apparatus may further send the information about the first tag to the target server via the first user plane function network element.

According to a second aspect, an embodiment of this application provides a first communication method. The method may be performed by a first user plane function network element, or may be performed by a chip corresponding to the first user plane function network element. This is not limited herein. The method specifically includes the following steps: The first user plane function network element receives information about a first tag and first information, where the first information is used to determine a target server of the first tag. The first user plane function network element determines the target server of the first tag based on the first information. The first user plane function network element sends the information about the first tag to the target server.

In the solutions of this application, the first user plane function network element receives the information about the first tag and the first information. Because the first information is used to determine the target server of the first tag, the first user plane function network element may determine the target server of the first tag based on the first information, and further can effectively and accurately send the information about the first tag to the target server.

In a possible implementation, that the first user plane function network element receives first information includes: The first user plane function network element receives an N4 session request message, where the N4 session request message includes the first information, the first information indicates a first tag filter, and the first tag filter is used to match a corresponding server based on an identifier of a tag.

In this implementation, that the first user plane function network element determines the target server of the first tag based on the first information includes: The first user plane function network element determines the first tag filter based on the first information. The first user plane function network element matches the target server of the first tag based on an identifier of the first tag and by using the first tag filter.

For example, the first user plane function UPF network element may receive the N4 session request message from a session management function SMF network element in a PDU session establishment/modification process, where the N4 session request message includes a first message.

In this implementation, the first user plane function network element receives the N4 session request message, to obtain the first message carried in the N4 session request message, where the first message indicates the first tag filter. Therefore, the first user plane function network element may determine the first tag filter based on the first information, and the first tag filter is used to match the corresponding server based on the identifier of the tag, so that the first user plane function network element can accurately match the target server of the first tag based on the identifier of the first tag and by using the first tag filter.

In a possible implementation, that the first user plane function network element receives information about a first tag includes: The first user plane function network element receives the information about the first tag from a first communication apparatus.

In this implementation, that the first user plane function network element receives first information includes: The first user plane function network element receives an N4 session request message, where the N4 session request message includes the first information, and the first information indicates address information of the first communication apparatus and/or third port number information for the first communication apparatus to send the information about the first tag.

Further, that the first user plane function network element determines the target server of the first tag based on the first information includes: The first user plane function network element determines the address information and/or the third port number information of the first communication apparatus based on the first information. The first user plane function network element determines the target server of the first tag based on the address information and the third port number information of the first communication apparatus, and first mapping information, where the first mapping information includes a correspondence between address information and/or port number information of the first communication apparatus and an identifier of a server.

The correspondence between the address information and/or the port number information of the first communication apparatus and the identifier of the server included in the first mapping information may be a preconfigured and known relationship.

In this implementation, the first user plane function network element receives the information about the first tag from the first communication apparatus. In this case, when the first user plane function network element receives the N4 session request message, and the included first information indicates the address information of the first communication apparatus and/or the third port number information for the first communication apparatus to send the information about the first tag, the first user plane function network element can accurately determine the target server of the first tag based on the address information of the first communication apparatus and/or the third port number information for the first communication apparatus to send the information about the first tag and the first mapping information.

In a possible implementation, that the first user plane function network element receives first information includes: The first user plane function network element receives an N4 session request message, where the N4 session request message includes the first information, and the first information indicates fourth port number information for the first user plane function network element to receive the information about the first tag. That the first user plane function network element determines the target server of the first tag based on the first information includes: The first user plane function network element determines, based on the first information, the fourth port number information for the first user plane function network element to receive the information about the first tag. The first user plane function network element determines the target server of the first tag based on the fourth port number information and second mapping information, where the second mapping information includes a correspondence between port number information of the first user plane function network element and an identifier of a server.

In this implementation, when the first user plane function network element receives the N4 session request message, and the included first information indicates the fourth port number information for the first user plane function network element to receive the information about the first tag, the first user plane function network element can accurately determine the target server of the first tag based on the fourth port number information and the second mapping information.

In a possible implementation, that the first user plane function network element receives first information includes: The first user plane function network element receives an N4 session request message, where the N4 session request message includes the first information, and the first information indicates address information of the target server and/or fifth port number information for receiving the information about the first tag on the target server, where the address information and/or the fifth port number information of the target server are/is determined based on second indication information, the second indication information indicates home enterprise information of the first tag, and the second indication information is carried in a second session request message sent by a first communication apparatus. That the first user plane function network element determines the target server of the first tag based on the first information includes: The first user plane function network element determines the address information and/or the fifth port number information of the target server based on the first information. The first user plane function network element determines the target server based on the address information and/or the fifth port number information of the target server.

In this implementation, when the first user plane function network element receives the N4 session request message, and the included first information indicates the address information of the target server and/or the fifth port number information for receiving the information about the first tag on the target server, the first user plane function network element can accurately determine the target server of the first tag based on the address information of the target server and/or the fifth port number information for receiving the information about the first tag on the target server.

According to a third aspect, an embodiment of this application provides a second communication method. The method may be performed by a first network element, or may be performed by a chip corresponding to the first network element. This is not limited herein. The method specifically includes the following steps: The first network element receives a second message, where the second message includes information about a first tag and a first identifier, and the first identifier is used to determine a target server of the first tag. The first network element determines the target server of the first tag based on the first identifier. The first network element sends the information about the first tag to the target server.

For example, the first network element may receive the second message from a second network element. The first network element may be a network exposure function NEF network element, and the second network element may be a first communication apparatus (for example, a terminal device having a reader function) or an access and mobility management function AMF network element.

In the solutions of this application, the first network element obtains the information about the first tag and the first identifier. Because the first identifier is used to determine the target server of the first tag, the first network element may determine the target server of the first tag based on the first identifier, and further can accurately send the information about the first tag to the target server.

In a possible implementation, that the first network element determines the target server of the first tag based on the first identifier includes: The first network element determines the target server of the first tag based on the first identifier and a first correspondence, where the first correspondence includes a correspondence between the first identifier and the target server.

In this implementation, the first network element can effectively and accurately determine the corresponding target server.

In a possible implementation, before the first network element obtains the second message from the second network element, the method further includes: The first network element sends a first message to a second network element, where the first message includes a first operation instruction, a second tag filter, and the first identifier, the first operation instruction indicates the second network element to obtain an identifier of the first tag from an identifier of at least one tag based on the first identifier, and the second tag filter is used to determine information about a corresponding tag based on identifiers of different tags.

It needs to be noted that the first identifier may be information identifying the target server. For example, the first identifier may be an identifier of the first message, or the first identifier may be an identifier of the first operation instruction, and there is a one-to-one correspondence between the identifier of the first message and the target server. This is not specifically limited in this application.

In this implementation, the first network element sends the first operation instruction, the second tag filter, and the first identifier to the second network element, so that the second network element may obtain the information about the first tag based on the first operation instruction, the first identifier, and the second tag filter, thereby ensuring that the first network element can subsequently accurately determine the target server of the first tag based on the first identifier after effectively obtaining the information about the first tag and the first identifier from the second network element.

According to a fourth aspect, an embodiment of this application provides a second communication method. The method may be performed by a second network element, or may be performed by a chip corresponding to the second network element. This is not limited herein. The method specifically includes the following steps: The second network element receives a first message, where the first message includes a first operation instruction, a second tag filter, and a first identifier, where the first operation instruction indicates the second network element to obtain an identifier of at least one tag, the second tag filter is used to determine information about a corresponding tag based on identifiers of different tags, and the first identifier is used to determine a target server of a first tag. The second network element obtains an identifier of the first tag based on the first operation instruction and the first identifier, and matches the second tag filter based on the identifier of the first tag, to obtain information about the first tag. The second network element sends a second message, where the second message includes the information about the first tag and the first identifier.

For example, the first network element may be a first communication apparatus, for example, a terminal device having a reader function, and the second network element may alternatively be an access and mobility management function AMF network element.

In this application, the second network element receives the first message, where the first message includes the first operation instruction, the second tag filter, and the first identifier. Then, the second network element may perform a tag operation based on the first operation instruction, obtain the identifier of the first tag from the identifier of the at least one tag, match the second tag filter based on the identifier of the first tag, to accurately obtain the information about the first tag, and send the information about the first tag and the first identifier to the first network element, so that the first network element can quickly and accurately determine the target server of the first tag based on the first identifier.

In a possible implementation, that the second network element receives a first message includes: The second network element receives the first message from a mobility management function network element. That the second network element sends a second message includes: The second network element sends the second message to the mobility management function network element.

For example, the second network element is a first communication apparatus, for example, a terminal device having a reader function. The terminal device may receive a first message from an NEF network element (namely, the first network element) via an AMF network element (namely, a mobility management function network element). After determining a first tag based on the first message, the terminal device may send information about the first tag to the AMF network element, so that the AMF network element then sends the information about the first tag to the NEF network element.

In this implementation, the second network element can effectively receive the first message from the mobility management function network element, and after determining the first tag, send, to the mobility management function network element, the second message including the information about the first tag.

In a possible implementation, the second network element receives the first message from a first network element. That the second network element sends a second message includes: The second network element sends the second message to the first network element.

For example, the second network element is an AMF network element (namely, the mobility management function network element). The AMF network element receives a first message from an NEF network element (namely, the first network element), and after determining the first tag based on the first message, the AMF network element sends the information about the first tag to the NEF network element.

It needs to be noted that, when the second network element is the AMF network element, the second network element may first obtain information about all tags from the first communication apparatus (for example, the terminal device having the reader function), including the information about the first tag.

In this implementation, the second network element directly receives the first message from the first network element, and after determining the first tag based on the first message, sends, to the first network element, the second message including the information about the first tag.

According to a fifth aspect, an embodiment of this application provides a communication apparatus. The communication apparatus may be used in a first communication apparatus, configured to implement a function in any one of the first aspect or the possible implementations of the first aspect; or the communication apparatus may be used in a first user plane function network element, and has a function of implementing the method in any one of the second aspect or the possible designs of the second aspect. The apparatus may include a receiving unit, a processing unit, and a sending unit.

According to a sixth aspect, this application further provides a communication apparatus. The communication apparatus may be used in a first network element, and has a function of implementing any one of the third aspect or the possible implementations of the third aspect; or the communication apparatus may be used in a second network element, and has a function of implementing the method in any one of the fourth aspect or the possible designs of the fourth aspect. The apparatus may include a receiving unit, a processing unit, and a sending unit.

According to a seventh aspect, this application further provides a communication apparatus. The communication apparatus may be used in a first communication apparatus, and the communication apparatus includes: a processor, configured to implement a function in any one of the first aspect or the possible implementations of the first aspect; or the communication apparatus may be used in a first user plane function network element, and is configured to implement a function in the method in any one of the second aspect or the possible designs of the second aspect. Optionally, the communication apparatus further includes: a transceiver, configured to implement a communication function of the communication apparatus.

According to an eighth aspect, this application further provides another communication apparatus. The communication apparatus may be used in a first network element, and the communication apparatus includes: a processor, configured to implement a function in any one of the third aspect or the possible implementations of the third aspect; or the communication apparatus may be used in a second network element, and is configured to implement a function in the method in any one of the fourth aspect or the possible designs of the fourth aspect. Optionally, the communication apparatus further includes: a transceiver, configured to implement a communication function of the communication apparatus.

According to a ninth aspect, this application further provides a communication system. The system includes a first communication apparatus (for example, a terminal device) configured to perform the method provided in the first aspect, and a first user plane function network configured to perform the method provided in the second aspect.

According to a tenth aspect, this application further provides a communication system. The system includes a first network element (for example, a network exposure function network element) configured to perform the method provided in the third aspect, and a second network element (a first communication apparatus, for example, a terminal device having a reader function, or an access and mobility function management network element) configured to perform the method provided in the fourth aspect.

According to an eleventh aspect, an embodiment of this application further provides a computer storage medium. The storage medium stores a software program. When the software program is read and executed by one or more processors, the method provided in any one of the first aspect or the possible implementations can be implemented, or the method provided in any one of the second aspect or the possible implementations can be implemented; or when the software program is read and executed by one or more processors, the method provided in any one of the third aspect or the possible implementations can be implemented, or the method provided in any one of the fourth aspect or the possible implementations can be implemented.

According to a twelfth aspect, an embodiment of this application further provides a computer program product including instructions. When the instructions are run on a computer, the method provided in any one of the first aspect or the possible implementations is performed, or the method provided in any one of the second aspect or the possible implementations is performed; or when the instructions are run on a computer, the method provided in any one of the third aspect or the possible implementations is performed, or the method provided in any one of the fourth aspect or the possible implementations is performed.

According to a thirteenth aspect, an embodiment of this application further provides a chip system. The chip system includes a processor, configured to support a first communication apparatus in implementing functions in the first aspect, configured to support a first user plane function network element in implementing functions in the second aspect, configured to support a first network element in implementing functions in the third aspect, or configured to support a second network element in implementing functions in the fourth aspect.

In a possible design, the chip system further includes a memory. The memory is configured to store program instructions and data that are necessary for execution by the apparatus. The chip system may include a chip, or may include the chip and another discrete device.

For technical effects that can be achieved in the fifth aspect, the seventh aspect, and any one of the possible implementations, refer to the first aspect, the second aspect, and any one of the possible implementations. For technical effects that can be achieved by the sixth aspect, the eighth aspect, and any one of the possible implementations, refer to the third aspect, the fourth aspect, and any one of the possible implementations. Details are not described herein again.

### BRIEF DESCRIPTION OF DRAWINGS

FIG. 1 is a diagram of reading/writing a passive or semi-passive internet of things tag;
FIG. 2 is a diagram of a process in which a reader performs inventory on a tag (for example, a P-IoT tag);
FIG. 3A is a diagram of a first transmission path of information about a tag;
FIG. 3B is a diagram of a second transmission path of information about a tag;
FIG. 3C is a diagram of a third transmission path of information about a tag;
FIG. 4 is a diagram of a network architecture according to an embodiment of this application;
FIG. 5A is a schematic flowchart of a communication method according to an embodiment of this application;
FIG. 5B is a schematic flowchart of another communication method according to an embodiment of this application;
FIG. 6A and FIG. 6B are a schematic flowchart of another communication method according to an embodiment of this application;
FIG. 7A and FIG. 7B are a schematic flowchart of Embodiment 1 according to an embodiment of this application;
FIG. 8A and FIG. 8B are a schematic flowchart of Embodiment 2 according to an embodiment of this application;
FIG. 9 is a schematic flowchart of Embodiment 3 according to an embodiment of this application;
FIG. 10 is a schematic flowchart of Embodiment 4 according to an embodiment of this application;
FIG. 11 is a diagram of a structure of a communication apparatus according to an embodiment of this application;
FIG. 12 is a diagram of a structure of a communication device according to an embodiment of this application; and
FIG. 13 is a diagram of a structure of a chip apparatus according to an embodiment of this application.

### DESCRIPTION OF EMBODIMENTS

Embodiments of this application provide a communication method and apparatus. The method and the apparatus are based on a same or similar technical concept. Because the method and the apparatus have similar problem-resolving principles, mutual reference may be made to implementations of the method and the apparatus. Repeated parts are not described again.

For ease of understanding technical solutions in embodiments of this application, the following first briefly describes an existing passive or semi-passive internet of things technology.

With development of an internet of things technology, application scenarios of the internet of things technology are increasingly wide, for example, warehouse, transportation, material, and fixed asset management. Usually, the internet of things technology may include a passive or semi-passive internet of things (passive internet of things, P-IoT) technology. To be specific, a node in a network may obtain energy from an environment, to support perception, transmission, distributed computing, and the like of data in the network.

In a passive or semi-passive internet of things architecture, a passive tag or a semi-passive tag, a reader (Reader), and a server may be usually included. The reader (Reader) may read/write a tag (or a radio frequency card) in a wireless radio frequency manner, to identify the tag (or the radio frequency card), and exchange information and data with the tag (or the radio frequency card). A tag (namely, the semi-passive tag) may alternatively store electric energy by obtaining solar energy or other means, and actively send a signal of a specific frequency to the reader. The reader receives information carried in the signal and decodes the information, and further sends decoded information to a central information system for corresponding data processing. Although a name of a terminal in the internet of things technology is defined by using a passive tag/a semi-passive tag in this specification, this application is also applicable to another name of a terminal that uses a similar internet of things technology, for example, an energy storage tag, a passive energy storage tag, or a zero-power consumption terminal.

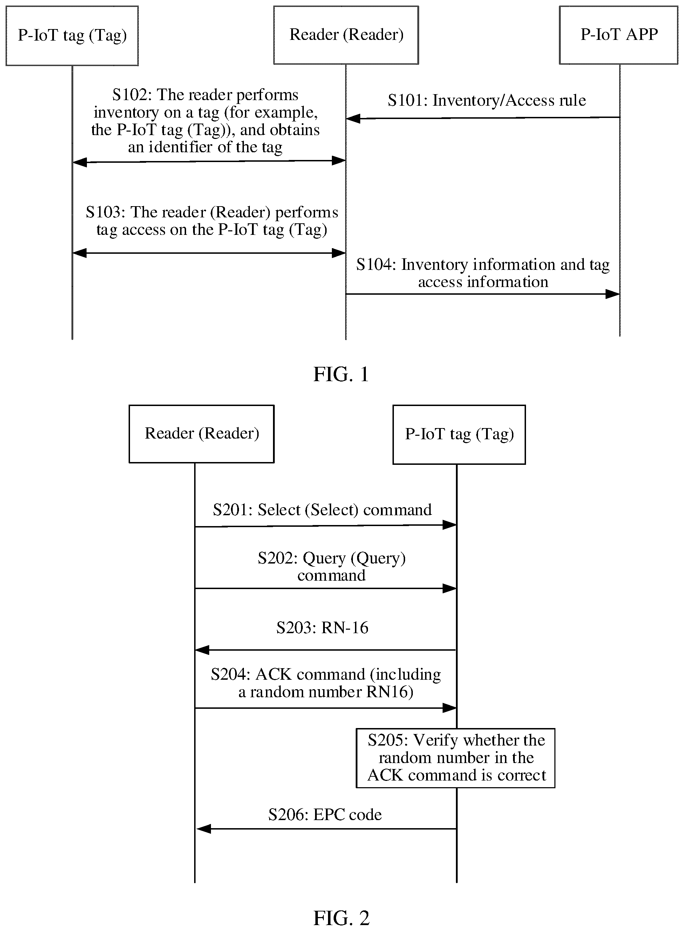

FIG. 1 is a diagram of reading/writing a passive or semi-passive internet of things tag. The following steps may be specifically included.

S101: A P-IoT application (P-IoT APP) sends an inventory/access rule to a reader (Reader).

Correspondingly, the reader receives the inventory/access rule.

For example, the inventory/access rule may be: performing inventory once every hour, and obtaining information from storage areas of a tag 1, a tag 2, and a tag 3.

S102: The reader performs inventory on a tag (for example, a P-IoT tag), to obtain an identifier of the tag.

For example, the reader performs inventory on the tags according to the received inventory/access rule, for example, performs inventory on to-be-accessed tags once every hour, and obtains identifiers of the to-be-accessed tags.

It should be understood that a procedure in which the reader performs inventory on the tags may be understood as a procedure in which the reader establishes connections to and interacts with the tags (for example, the P-IoT tags), and obtains information of each other. Usually, each tag has a corresponding identifier, including but not limited to an electronic product code (electronic product code, EPC) and a tag identifier (tag identifier, TID).

In this inventory procedure, the tags send the EPCs or the TIDs of the tags to the reader, so that the reader can learn which tags are within coverage of the reader, and report the tags to middleware and a server.

S103: The reader (Reader) performs tag access on the P-IoT tag.

After completing the inventory, the reader (Reader) performs tag access on the to-be-accessed tags to the reader (Reader), to complete a tag access process, so that the reader (Reader) can subsequently obtain information about the accessed tags.

S104: The reader (Reader) feeds back inventory information and tag access information to the P-IoT APP.

The reader (Reader) sends the inventory information of the tag and the access information of the tag to the P-IoT APP.

For a process in which the reader performs inventory on the tag (for example, the P-IoT tag) in step S102, refer to FIG. 2. A specific procedure is as follows.

S201: The reader sends a select command to the P-IoT tag.

Correspondingly, the P-IoT tag receives the Select command.

Specifically, after receiving an inventory command, the reader generates the Select command, and then sends the Select command to the P-IoT tag. The inventory command includes a tag range, for example, EPCs/TIDs within some specific ranges. After receiving (monitoring) the Select command, the tag inventories whether the tag belongs to the tag range that needs to be determined in the Select command. If belonging to the tag range, the tag continues to monitor a subsequent Query command. If the tag does not belong to the tag range, the tag does not subsequently perform the following steps (that is, does not perform any action).

S202: The reader sends the Query command to the P-IoT tag.

Correspondingly, after receiving the valid Query command, the P-IoT tag generates a random number.

S203: The P-IoT tag sends an RN-16 to the reader.

For example, after receiving the valid Query command, the tag whose random number is 0 feeds back, to the reader, a temporary password RN-16, namely, a 16-bit random number.

S204: The reader sends an acknowledgment (acknowledgment, ACK) command to the P-IoT tag.

After receiving the random number from the tag, the reader sends the ACK command to the tag. The command includes the random number (RN16) that is just received.

S205: The P-IoT tag verifies whether the random number in the ACK command is correct.

If verifying that the random number in the ACK command is correct, the P-IoT tag performs next step S206.

S206: The P-IoT tag sends an EPC code to the reader.

In addition, after sending the EPC code of the P-IoT tag to the reader, the P-IoT tag enters a short sleep state.

After receiving the EPC code from the tag, the reader completes the inventory on the tag.

Optionally, the reader continues to send a QueryRep command, the tag that receives QueryRep subtracts 1 from the original random number, and the foregoing steps S203 to S206 are re-performed until all tags are completely inventoried.

In an existing 3GPP network, when being used as a reader, UE supports a process of reading/writing a passive or semi-passive internet of things tag, which may mainly include the following transmission paths.

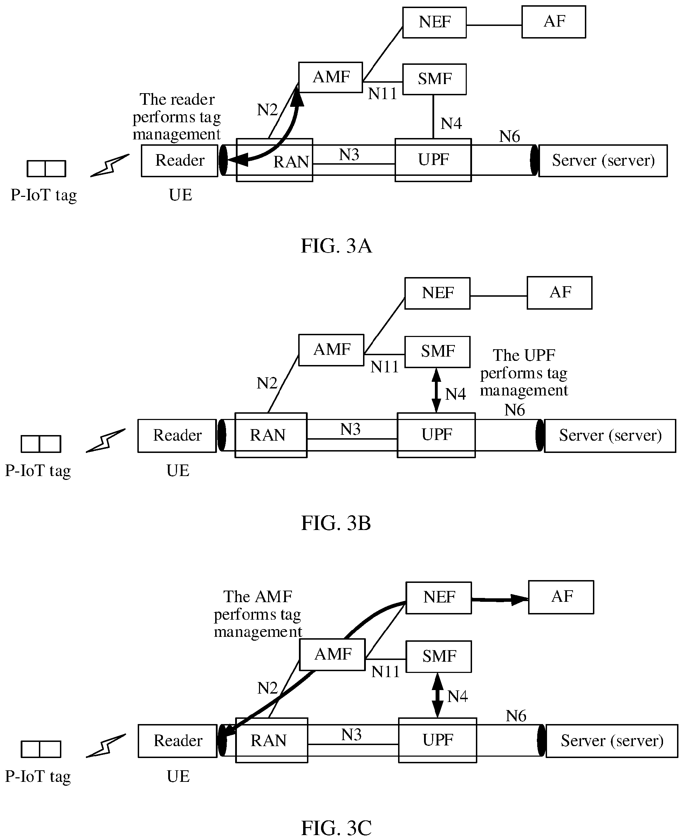

First transmission manner: Refer to FIG. 3A. A reader manages a tag, and the tag directly establishes a user plane connection to an enterprise server via the reader, so that information (or an instruction) about the tag may be transmitted through the user plane connection established via the reader.

Second transmission path: Refer to FIG. 3B. A UPF network element manages a tag, the tag establishes a user plane connection to the UPF network element via a reader, and the UPF network element establishes a user plane connection to an enterprise server, so that information (or an instruction) about the tag read/wrote by the reader may be transmitted through the user plane connections.

Third transmission path: Refer to FIG. 3C. Transmission may be performed through a control plane channel. To be specific, a server sends an instruction to an AMF network element via an NEF network element, so that the AMF network element may obtain information and/or data about a tag from UE, and the AMF network element or a control plane (control plane, CP) network element manages the tag, and may send the information about the tag to the application server via the NEF network element.

However, in an existing tag reading/writing manner, when a terminal device is used as a reader, the reader may be shared by a plurality of enterprises, and information about the enterprises is not provided by using tags. Therefore, the reader cannot directly establish a user plane channel with a home enterprise server of a target tag. In addition, the reader does not execute different routing policies for the information about the enterprises that is provided by using different tags, so that the network cannot identify a home enterprise of the tags to provide different communication services for different enterprises.

Therefore, this application provides a communication method. The method includes: A first communication apparatus receives a first request, where the first request indicates the first communication apparatus to obtain information about a first tag, and the information about the first tag includes an identifier of the first tag. Then, the first communication apparatus obtains the information about the first tag based on the first request. Then, the first communication apparatus determines a first communication session, where the first communication session is used to transmit the information about the first tag. Finally, the first communication apparatus sends the information about the first tag by using the first communication session. According to the method, after obtaining the information about the first tag (namely, a target tag), the first communication apparatus determines the corresponding first communication session for the information about the first tag, so that it can be ensured that the first communication apparatus can effectively and accurately transmit the information about the first tag by using the first communication session.

The solutions of this application are applicable to a 5G system architecture, and are further applicable to, but not limited to, a long term evolution (long term evolution, LTE) communication system and various future evolved wireless communication systems.

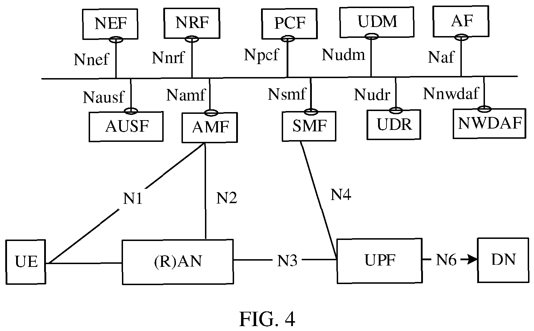

FIG. 4 is a diagram of a network architecture to which a communication method is applicable according to an embodiment of this application. As shown in FIG. 4, the network architecture may include an access network and a core network. A terminal device accesses a data network (data network, DN) via the access network and the core network.

The terminal device may be user equipment (user equipment, UE), a mobile station, a mobile terminal, an application client, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, a smart grid, smart furniture, a smart office, smart wearable, smart transportation, and a smart city. The terminal device may be a mobile phone, a tablet computer, a computer with a wireless transceiver function, a wearable device, a vehicle, an urban air transportation vehicle (like an unmanned aerial vehicle or a helicopter), a ship, a robot, a mechanical arm, a smart home device, or the like. In the accompanying drawings and the following embodiments, an example in which UE is used as a terminal device is used for description, and the UE that appears in any subsequent place may be replaced with the terminal device or another example of the terminal device.

The access network is used to implement an access-related function, may provide a network access function for an authorized user in a specific area, and can determine transmission links with different quality based on a user level, a service requirement, and the like, to transmit user data. The access network forwards a control signal and user data between the UE and the core network. The access network may include an access network device. The access network device may be a device that provides access for the UE, and may include a radio access network (radio access network, RAN) device and a wireline access network device. The RAN device is mainly responsible for functions such as radio resource management, quality of service (quality of service, QoS) management, and data compression and encryption on an air interface side. The RAN device may include base stations in various forms, for example, a macro base station, a micro base station (which may also be referred to as a small cell), a relay station, an access point, and a balloon station. In systems using different radio access technologies, names of a device having a base station function may be different. For example, in a 5G system, the device is referred to as a RAN or a next-generation NodeB (next-generation NodeB, gNB). In a long term evolution (long term evolution, LTE) system, the device is referred to as an evolved NodeB (evolved NodeB, eNB or eNodeB).

The access network device and the UE may be at a fixed location, or may be mobile. The access network device and the UE may be deployed on land, including an indoor device or an outdoor device, a handheld device, or a vehicle-mounted device; or may be deployed on a water surface; or may be deployed on a plane, a balloon, and a satellite in the air. An application scenario of the access network device and the UE is not limited in embodiments of this application.

The core network is responsible for maintaining subscription data of a mobile network, and provides session management, mobility management, policy management, security authentication, and another function for the UE. The core network includes but is not limited to one or more of the following network elements: an application function (application function, AF) network element, a unified data management (unified data management, UDM) network element, a unified data repository (unified data repository, UDR) network element, a policy control function (policy control function, PCF) network element, a session management function (session management function, SMF) network element, an access and mobility management function (access and mobility management function, AMF) network element, a network repository function (network repository function, NRF) network element, an authentication server function (authentication server function, AUSF) network element, a network exposure function (network exposure function, NEF) network element, a user plane function (user plane function, UPF) network element, and a network data analytics function (Network Data Analytics Function, NWDAF) network element.

The AMF network element is mainly responsible for mobility management in the mobile network, such as user location update, registration of a user with a network, and user handover.

The SMF network element is mainly responsible for session management in the mobile network, such as session establishment, modification, and release. A specific function is, for example, allocating an internet protocol (internet protocol, IP) address to the user, or selecting a UPF that provides a packet forwarding function.

The UPF network element is mainly responsible for forwarding and receiving user data, and may receive user data from the data network, and transmit the user data to the UE via the access network device; or may receive user data from the UE via the access network device, and forward the user data to the data network.

The UDM network element includes functions such as performing of subscription data management, and user access authorization.

The UDR network element includes functions such as storage and retrieval of subscription data, policy data, application data, and other types of data.

The NEF network element is mainly configured to support capability and event exposure.

The AF network element transfers a requirement of an application side on a network side, for example, a QoS requirement or user status event subscription. The AF may be a third-party functional entity, or may be a carrier-deployed application service, for example, an IP multimedia subsystem (IP Multimedia Subsystem, IMS) voice call service.

The PCF network element mainly supports providing a unified policy framework to control a network behavior, and providing a policy rule for a control layer network function, and is responsible for obtaining policy decision-related subscription information of a user. The PCF network element may provide, for the AMF network element and the SMF network element, a policy, such as a QoS policy or a slice selection policy.

The NRF network element may be configured to: provide a network element discovery function, and provide, based on a request of another network element, network element information corresponding to a network element type. The NRF further provides a network element management service, for example, registration, update, and deregistration of a network element and subscription and push of a network element status.

The AUSF network element is responsible for performing authentication on the UE and verifying validity of the UE.

The NWDAF network element provides functions such as network data collection and analysis based on technologies such as big data and artificial intelligence.

A plurality of services may be deployed on the DN, and a service such as data and/or voice may be provided by the DN for the UE. For example, the DN is a private network of an intelligent factory, a sensor mounted in a workshop of the intelligent factory may be the UE, a control server of the sensor is deployed in the DN, and the control server may provide a service for the sensor. The sensor may communicate with the control server, to obtain instructions of the control server, transmit collected sensor data to the control server based on the instructions, and the like. For another example, the DN is an internal office network of a company, a mobile phone or a computer of an employee in the company may be the UE, and the mobile phone or the computer of the employee can access information, a data resource, or the like on the internal office network of the company.

The AF network element, the UDM network element, the UDR network element, the PCF network element, the SMF network element, the AMF network element, the NRF network element, the AUSF network element, the NEF network element, the UPF network element, and the NWDAF network element may also be respectively referred to as an AF, UDM, UDR, a PCF, an SMF, an AMF, an NRF, an AUSF, an NEF, a UPF, and an NWDAF for short, as shown in FIG. 1.

In FIG. 1, Nausf, Nnef, Nnrf, Namf, Npcf, Nsmf, Nudm, Nudr, Naf, and Nnwdaf are respectively service-based interfaces provided by the AUSF, the NEF, the NRF, the AMF, the PCF, the SMF, the UDM, the UDR, the AF, and the NWDAF, and are used to invoke corresponding service-based operations. N1, N2, N3, N4, and N6 are interface sequence numbers. Meanings of these interface sequence numbers are as follows:

(1) N1: is an interface between the AMF and the UE, and may be used to transfer non-access stratum (non-access stratum, NAS) signaling (for example, including a QoS rule from the AMF) to the UE.

(2) N2: is an interface between the AMF and the access network device, and may be used to transfer radio bearer control information from a core network side to the access network device, and the like.

(3) N3: is an interface between the access network device and the UPF, and may be mainly used to transfer uplink and downlink user plane data between the access network device and the UPF.

(4) N4: is an interface between the SMF and the UPF, and may be used to transfer information between a control plane and a user plane, including delivery of a forwarding rule, a QoS rule, a traffic statistics rule, and the like from the control plane to the user plane, and reporting of user plane information.

(5) N6: an interface between the UPF and the DN, and is used to transmit uplink and downlink user data flows between the UPF and the DN.

It may be understood that the foregoing network element or function may be a network element in a hardware device, may be a software function running on dedicated hardware, or may be a virtualized function instantiated on a platform (for example, a cloud platform). In a possible implementation, the network elements or the functions may be implemented by one device, may be jointly implemented by a plurality of devices, or may be one functional module in one device. This is not specifically limited in embodiments of this application.

The technical solutions of this application are described below with reference to specific embodiments.

An embodiment of this application provides a communication method. The method is applicable to but is not limited to the network architecture in FIG. 4, and the method may be performed by a network element in this application, or may be performed by a chip corresponding to the network element. The network element in this application may be a physical entity network element, or may be a virtual network element. A form of the network element in this application is not specifically limited.

In addition, in embodiments of this application, an apparatus mainly configured to perform tag identification is referred to as a first communication apparatus. The first communication apparatus may be a reader (or a controller or a chip corresponding to the reader), or may be a terminal device (or a controller or a chip corresponding to the terminal device) that establishes a communication connection to the reader. The terminal device may be, but is not limited to, a computer, a mobile phone, a tablet computer, or another device that can establish a communication connection to the reader. In addition, it needs to be noted that ordinal numbers such as "first" and "second" mentioned below are used to distinguish between a plurality of objects for ease of description, but are not used to limit a sequence, a time sequence, a priority, or an importance degree of the plurality of objects. Specific forms of the first communication apparatus and the related network element in this embodiment are not limited in this application.

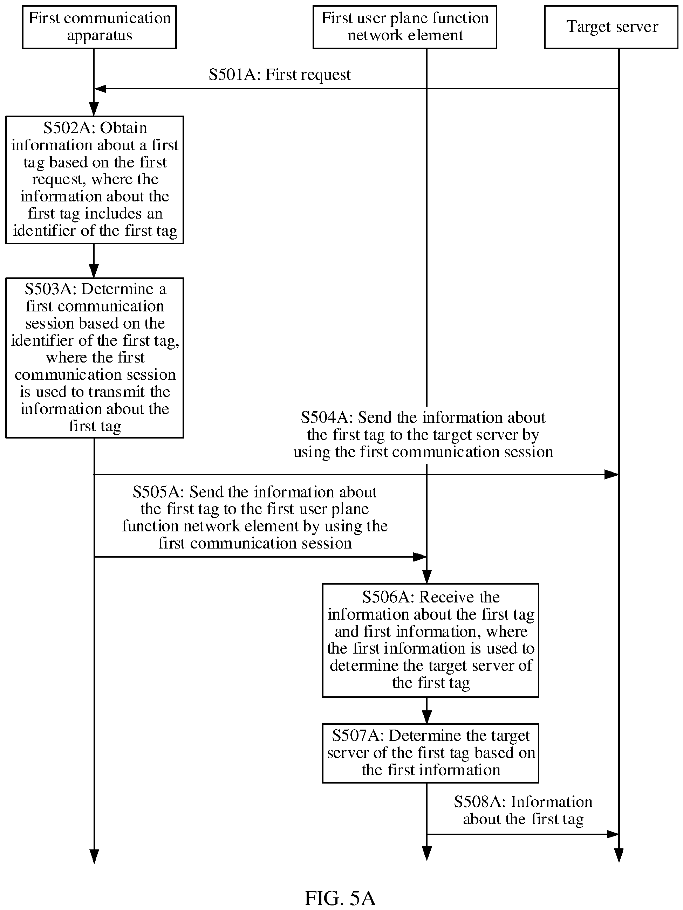

FIG. 5A is a flowchart of a communication method according to an embodiment of this application. The method may specifically include the following steps.

S501A: A first communication apparatus receives a first request from a target server.

The first request indicates the first communication apparatus to obtain information about a first tag. The first tag may be a group of tags that meet a specific inventory rule. For example, the first tag may be a group of tags within a specific area, a group of tags of a specific type, a group of tags including some fields, or a group of tags belonging to a specific enterprise/carrier. For example, the first tag may alternatively be a specific tag with a specified tag identifier, where the specified tag identifier may be included in the inventory rule.

For example, the first request may be a data transmission message sent through a user plane, or may be a non-access stratum message sent through a control plane, for example, a downlink non-access stratum transmission message.

For example, the first communication apparatus may be a reader, for example, UE. If an application server (for example, a PIOT server) needs to obtain information about a corresponding first tag, the application server may send a first request to the UE, where the first request indicates the UE to obtain the information about the first tag, and the information about the first tag includes an identifier (for example, an EPC or a TID) of the first tag. Correspondingly, the UE receives the first request from the application server.

In the solutions of this application, before the first communication apparatus receives the first request, a process of performing tag inventory is further included; or after receiving the first request and before determining a first communication session (or after step S501A and before step S502A), the first communication apparatus further performs a process of performing tag inventory. That is, the first request message further includes instruction information needed by the first communication apparatus to perform tag inventory, where the instruction information may include, but is not limited to, one or more of a tag inventory range, a tag type, a tag home enterprise, and a tag home carrier. For a specific tag inventory process, refer to the process shown in FIG. 2. Details are not described herein again.

Through the foregoing tag inventory process, it can be ensured that the first tag (namely, a target tag) that the first request information indicates the first communication apparatus to obtain can access the first communication apparatus, so that the first communication apparatus may effectively obtain the information about the first tag.

S502A: The first communication apparatus obtains the information about the first tag based on the first request, where the information about the first tag includes the identifier of the first tag.

S503A: The first communication apparatus determines the first communication session based on the identifier of the first tag, where the first communication session is used to transmit the information about the first tag.

In an implementation, that the first communication apparatus determines the first communication session based on the identifier of the first tag includes: The first communication apparatus determines the first communication session from at least one communication session based on the identifier of the first tag and first routing policy information, where the first routing policy information includes a correspondence between the identifier of the first tag and an identifier of the first communication session.

The first routing policy information in this application may be an improved user equipment route selection policy (URSP policy), that is, identifier information of the tag is added to an existing URSP policy (routing policy), so that the corresponding communication session for transmitting the information about the tag may be further selected based on the identifier of the tag.

For example, for the first routing policy information, specifically refer to Table 1 in the following specific embodiment 1.

Optionally, the first routing policy information may further include a correspondence between the identifier of the first tag and address information and/or port number information of the target server. Therefore, the first communication apparatus may further determine, based on the correspondence included in the first routing policy information, the address information and/or the port number information of the target server that correspond/corresponds to the first tag, and further determine, based on a correspondence between the address information and/or the port number information of the server and the communication session, the first communication session corresponding to the address information and/or the port number information of the target server. A specific manner in which the first communication apparatus determines the first communication session based on the first routing policy information is not limited in this application.

In an implementation, before that a first communication apparatus receives a first request, the method further includes: The first communication apparatus establishes at least one communication session, where the at least one communication session includes the first communication session. The first communication apparatus establishes at least one piece of routing policy information, where each piece of routing policy information includes a correspondence between a corresponding tag and an identifier of a communication session.

That the first communication apparatus establishes the first communication session may include but is not limited to the following manners.

Implementation 1: That the first communication apparatus establishes the first communication session includes: The first communication apparatus sends a first session request message, where the first session request message includes first indication information, and the first indication information indicates home enterprise information of the first tag. The first communication apparatus receives a first response message, where the first response message is used to respond to the first session request message, the first response message includes first target address information and/or first port number information, and the first target address information and/or the first port number information are/is determined based on the first indication information. The first communication apparatus establishes the first communication session based on the first target address information and/or the first port number information, where the first target address information and/or the first port number information are/is used to determine a target server, and the target server is a server of a home enterprise.

Optionally, the first indication information may be a data network name DNN of an enterprise, or the home enterprise information that is of the first tag and that is indicated by the first indication information may be enterprise information corresponding to the DNN.

In the solutions of this application, the home enterprise information of the first tag may alternatively be directly carried in the first session request message, and is sent by the first communication apparatus. However, to reduce overheads for transmitting the first session request message, the first indication information may indicate the home enterprise information of the first tag, and the first communication apparatus sends the first session request message including the first indication information.

The foregoing implementation 1 may be implemented based on the first transmission path shown in FIG. 3A, and the first communication apparatus may be considered as UE (a reader).

For example, the UE sends a PDU session establishment request message (equivalent to the first session request message) to an AMF network element, where the first session request message includes first indication information indicating home enterprise information of a first tag. After receiving the PDU session establishment request message, the AMF network element selects an appropriate SMF network element, and sends a PDU session create session context request message to the SMF network element. Then, the AMF network element receives a PDU session create session context response message from the SMF network element, and receives an N1N2 message from the SMF network element, where the N1N2 message carries an address (equivalent to first target address information) and port number information (equivalent to first port number information) of a target PIOT server. The SMF network element sends an N2 PDU session request message (carrying the address and the port number information of the target PIOT server) to a RAN. The RAN establishes an air interface resource with the UE and sends a NAS message (equivalent to a first response message) to the UE, where the NAS message carries the address and the port number information of the target PIOT server. Finally, the UE may establish a connection to the target PIOT server (equivalent to establishing a first communication session) based on the address and the port number information of the target PIOT server in the NAS message.

Implementation 2: That the first communication apparatus establishes the first communication session includes: The first communication apparatus sends a second session request message, where the second session request message includes second indication information, and the second indication information indicates home enterprise information of the first tag. The first communication apparatus receives a second response message, where the second response message is used to respond to the second session request message, the second response message includes second target address information and/or second port number information, and the second target address information and/or the second port number information are/is determined based on the second indication information. The first communication apparatus establishes the first communication session based on the second target address information and/or the second port number information, where the second target address information and/or the second port number information are/is used to determine a first user plane function network element, and the first user plane function network element is a user plane network element that provides a service for a home enterprise.

The foregoing implementation 2 may be implemented based on the second transmission path shown in FIG. 3B. The first communication apparatus may be considered as UE (a reader), and the first user plane function network element may be a UPF network element.

In Implementation 2, the following two cases may be further included.

Case 1: There is only one user plane function network element used to transmit the information about the tag, that is, the first user plane function network element is a public user plane function network element. In a process in which the first communication apparatus establishes any one of at least one communication session, the first communication apparatus receives same second target address information and/or same second port number information, and the second target address information and/or the second port number information both indicate/indicates the first user plane function network element.

A first user plane function network element side may receive different target address information and/or different port number information from a session management function network element. Each piece of target address information and/or each piece of port number information are/is determined based on home enterprise information of a corresponding tag (or indication information indicating the home enterprise information of the corresponding tag), and each piece of target address information and/or each piece of port number information indicate/indicates a corresponding server.

Optionally, the home enterprise information of the tag or the indication information indicating the home enterprise information of the tag may be a data network name DNN of an enterprise.

For example, UE 1 obtains address information (equivalent to the second target address information) and/or corresponding port number information (equivalent to the second port number information) of a UPF 1 network element (equivalent to the first user plane function network element), where the address information and/or the corresponding port number information of the UPF 1 network element are/is determined based on a DNN of a home enterprise of a first tag or based on indication information indicating the DNN of the home enterprise of the first tag. Further, the UE 1 establishes a first PDU session connection to the UPF 1 network element (equivalent to establishing a first communication session) based on the address information and/or the corresponding port number information of the UPF 1 network element. For a case in which the UE 1 establishes a PDU session for a home enterprise of another tag, refer to a manner in which the UE 1 establishes the first PDU session for the home enterprise of the first tag for implementation. That is, the PDU session is a PDU session between the UE 1 and the UPF 1 network element.

It needs to be noted that, based on the foregoing case 1, when the first communication apparatus establishes the at least one communication session, the second target address information received by the first communication apparatus each time is the same, and indicates the first user plane function network element, but the second port number information received by the first user plane function network element may be different. Therefore, the first communication apparatus may further establish a corresponding communication session based on each piece of second port number information.

Case 2: There are a plurality of user plane function network elements configured to transmit the information about the tag, and home enterprise information of each tag corresponds to one user plane function network element. For example, the home enterprise information of the first tag corresponds to the first user plane function network element.

In a process in which the first communication apparatus establishes at least one communication session, the first communication apparatus receives different second target address information and/or different second port number information each time, and each piece of the second target address information and/or each piece of the second port number information both indicate/indicates a corresponding user plane function network element.

Therefore, in Case 2, after establishing at least one communication session connection, the first communication apparatus may determine, according to the enhanced URSP policy, the second target address information and/or the second port number information that correspond/corresponds to the first tag, to determine the first communication session.

For example, UE 1 obtains address information and/or corresponding port number information of a UPF 1 network element, and address information and/or corresponding port number information of a UPF2 network element. The address information and/or the corresponding port number information of the UPF 1 network element are/is determined based on a DNN_(1) of a home enterprise of a tag 1, and the address information and/or the corresponding port number information of the UPF2 network element are/is determined based on a DNN_(1) of a home enterprise of a tag 2. The UE 1 may establish a connection to the UPF 1 network element (that is, establishes a first communication session) based on the address information and/or the corresponding port number information of the UPF 1 network element, and the UE 1 may establish a connection to the UPF 2 network element based on the address information and/or the corresponding port number information of the UPF 2 network element.

Case 3: There are a plurality of user plane function network elements configured to transmit the information about the tag, which at least include: one user plane function network element corresponding to home enterprise information of one tag, and one user plane function network element corresponding to home enterprise information of a plurality of tags.

For a case in which the one user plane function network element corresponds to the home enterprise information of the plurality of tags, refer to a manner in the foregoing case 1. For a case in which the one user plane function network element corresponds to the home enterprise information of the one tag, refer to a manner in the foregoing case 2. Details are not described herein again.

According to the foregoing two implementations, the first communication session determined by the first communication apparatus may be used to transmit the information about the first tag between the first communication apparatus and the target server, or the first communication session is used to transmit the information about the first tag between the first communication apparatus and the first user plane function network element.

Therefore, that the first communication apparatus sends the information about the first tag by using the first communication session includes two transmission paths: the first transmission path (namely, the transmission path shown in FIG. 3A), referring to the following step S504A, and the second transmission path (namely, the transmission path shown in FIG. 3B), referring to the following steps S505A to S508A.

S504A: The first communication apparatus sends the information about the first tag to the target server by using the first communication session.

The information about the first tag may be data of the first identifier. Alternatively, the information about the first tag may include only the identifier of the first tag. This is not limited in this application.

Based on Implementation 1 in step S503A, the first communication apparatus sends the information about the first tag to the target server by using the first communication session. The information about the first tag may include the identifier of the first tag.

Therefore, in the foregoing implementation 1, the first communication apparatus can accurately send the information about the first tag to the target server directly by using the first communication session. For information that is about another tag and that is transmitted by the first communication apparatus, refer to a manner in which the first communication apparatus sends the information about the first tag to the target server for implementation. Details are not described herein again.

S505A: The first communication apparatus sends the information about the first tag to the first user plane function network element by using the first communication session.

Based on Implementation 2 in step S503A, the first communication apparatus sends the information about the first tag to the first user plane function network element by using the first communication session.

S506A: The first user plane function network element receives the information about the first tag and first information, where the first information is used to determine the target server of the first tag.

S507A: The first user plane function network element determines the target server of the first tag based on the first information.

When steps S506A and S507A are performed, the following several implementations may be specifically included but are not limited.

In Implementation 1, that the first user plane function network element receives first information includes: The first user plane function network element receives an N4 session request message, where the N4 session request message includes the first information, the first information indicates a first tag filter, and the first tag filter is used to match a corresponding server based on an identifier of a tag.

The first information may indicate the first tag filter, or the first information may be the first tag filter. This is not specifically limited in this application.

Further, that the first user plane function network element determines the target server of the first tag based on the first information includes: The first user plane function network element determines the first tag filter based on the first information. The first user plane function network element matches the target server of the first tag based on an identifier of the first tag and by using the first tag filter.

In Implementation 2, if the first user plane function network element receives the information about the first tag from the first communication apparatus, that the first user plane function network element receives first information includes: The first user plane function network element receives an N4 session request message, where the N4 session request message includes the first information, and the first information indicates address information of the first communication apparatus and/or third port number information for the first communication apparatus to send the information about the first tag.

The first information may indicate the address information of the first communication apparatus and/or the third port number information for the first communication apparatus to send the information about the first tag, or the first information may be the address information of the first communication apparatus and/or the third port number information for the first communication apparatus to send the information about the first tag. This is not specifically limited in this application.

Further, that the first user plane function network element determines the target server of the first tag based on the first information includes: The first user plane function network element determines the address information and/or the third port number information of the first communication apparatus based on the first information. The first user plane function network element determines the target server of the first tag based on the address information and the third port number information of the first communication apparatus, and first mapping information, where the first mapping information includes a correspondence between address information and/or port number information of the first communication apparatus and an identifier of a server.

In Implementation 3, that the first user plane function network element receives first information includes: The first user plane function network element receives an N4 session request message, where the N4 session request message includes the first information, and the first information indicates fourth port number information for the first user plane function network element to receive the information about the first tag.

The first information may indicate the fourth port number information for the first user plane function network element to receive the information about the first tag, or the first information may be the fourth port number information for the first user plane function network element to receive the information about the first tag. This is not specifically limited in this application.

Further, that the first user plane function network element determines the target server of the first tag based on the first information includes: The first user plane function network element determines, based on the first information, the fourth port number information for the first user plane function network element to receive the information about the first tag. The first user plane function network element determines the target server of the first tag based on the fourth port number information and second mapping information, where the second mapping information includes a correspondence between port number information of the first user plane function network element and an identifier of a server.

In Implementation 4, that the first user plane function network element receives first information includes: The first user plane function network element receives an N4 session request message, where the N4 session request message includes the first information, and the first information indicates address information of the target server and/or fifth port number information for receiving the information about the first tag on the target server, where the address information and/or the fifth port number information of the target server are/is determined based on second indication information, the second indication information indicates home enterprise information of the first tag, and the second indication information is carried in a second session request message sent by the first communication apparatus.

The first information may indicate the address information of the target server and/or the fifth port number information for receiving the information about the first tag on the target server, or the first information may be the address information of the target server and/or the fifth port number information for receiving the information about the first tag on the target server.

Further, that the first user plane function network element determines the target server of the first tag based on the first information includes: The first user plane function network element determines the address information and/or the fifth port number information of the target server based on the first information. The first user plane function network element determines the target server based on the address information and/or the fifth port number information of the target server.

S508A: The first user plane function network element sends the information about the first tag to the target server.

Based on Case 2 in Implementation 2 of step S503A, after the first communication apparatus establishes the at least one communication session connection, each user plane function network element is configured with a mapping relationship between the address information, the third port number information, and/or the fourth port number information of the first communication apparatus and the corresponding target server. Therefore, after obtaining the information about the first tag, the first communication apparatus may further determine, according to a routing rule, the first communication session corresponding to the first tag, so that the first communication apparatus sends the information about the first tag to the corresponding first user plane function network element by using the first communication session. The first user plane function network element obtains the information about the first tag from the first communication apparatus based on the address information and/or a third port number of the first communication apparatus, may directly determine the target server corresponding to the first tag, and further send the information about the first tag to the target server.

In this embodiment of this application, the "address information" may be understood as information used to determine an address, and the "port number information" may be understood as information used to determine a port number. The "address information" may be briefly referred to as the "address", and the two may have a same meaning. The "port number information" may also be briefly referred to as the "port number", and the two may also have a same meaning.

According to the communication method provided in this application, the first communication apparatus may establish the communication session with the corresponding server based on the home enterprise information of the tag, so that after receiving the information about the first tag, the first communication apparatus may accurately determine, based on the first routing policy information including the identifier of the tag, the first communication session for transmitting the information about the first tag, and further the first communication apparatus can effectively and accurately transmit the information about the first tag to the target server by using the first communication session. In addition, the first communication apparatus may further determine the first communication session of the first tag based on the first routing policy information. The first communication session is a communication session between the first communication apparatus and the corresponding user plane function network element. Therefore, the first communication apparatus may send the information about the first tag to the corresponding user plane function network element by using the first communication session, and then the user plane function network element effectively and accurately sends the information about the first tag to the target server.

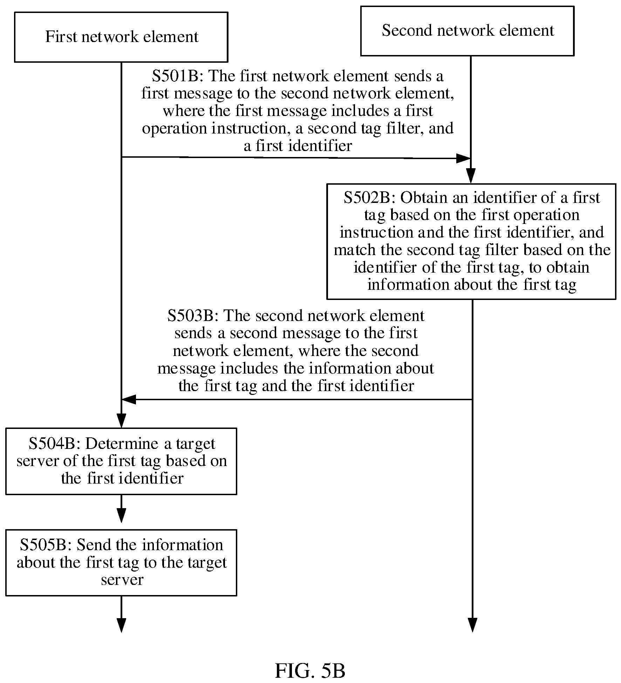

FIG. 5B is a flowchart of another communication method according to an embodiment of this application. The method may specifically include the following steps.

S501B: A first network element sends a first message to a second network element, where the first message includes a first operation instruction, a second tag filter, and a first identifier.

The first operation instruction indicates the second network element to obtain an identifier of a first tag from an identifier of at least one tag based on the first identifier, the second tag filter is used to determine information about the corresponding tag based on the identifier of the tag, and the first identifier is used to determine a target server of the first tag.

In an implementation, the first network element sends the first message to the second network element. Correspondingly, the second network element receives the first message from the first network element.

For example, the first network element is a network exposure function network element (NEF network element), and the second network element is a mobility management function network element (AMF network element). That is, the NEF network element sends a first message to the AMF network element, and the AMF network element directly receives the first message from the NEF network element.

In another implementation, that a first network element sends a first message to a second network element includes: The first network element sends the first message to a mobility management function network element. Correspondingly, the second network element receives content in the first message from the mobility management function network element. The content in the first message may include a first operation instruction and a second tag filter.

For example, the first message may be an AMF communication service message, an AMF event exposure service message, an AMF non-IP data transmission service message, or a message provided by another AMF through a service-based interface. This is not specifically limited in this application.

It needs to be noted that the content in the first message may be obtained by forwarding the first message to the second network element by the mobility management function network element, or may be obtained by sending a third message to the second network element by the mobility management function network element, for example, a downlink NAS transport message, and the third message carries the foregoing content in the first message, for example, the first operation instruction and the second tag filter.

For example, the first network element is a network exposure function network element (NEF network element), and the second network element is a first communication apparatus (for example, UE having a reader function). That is, the NEF network element first sends a first message to the AMF network element, where the first message includes a first operation instruction, a second tag filter, and a first identifier, and the AMF network element then sends a third message to the UE, where the third message includes the first operation instruction and the second tag filter.

S502B: The second network element obtains the identifier of the first tag based on the first operation instruction and the first identifier, and matches the second tag filter based on the identifier of the first tag, to obtain information about the first tag.

For example, the second network element performs, based on the first operation instruction, a tag operation, for example, the foregoing tag inventory process, to obtain the identifier of the at least one tag, and obtains the identifier of the first tag from the identifier of the at least one tag based on the first identifier. The second network element matches the second tag filter based on the identifier of the first tag, to obtain the information about the first tag.

For example, the second network element may alternatively first determine a range of the first tag based on the second tag filter, and perform a tag operation based on the first operation instruction, to obtain the information about the first tag (including the identifier of the first tag).

If the second network element is the first communication apparatus having the reader function, the first communication apparatus performs step S502B. If the second network element is the mobility management function network element, the mobility management function network element performs step S502B.

If the second network element is the mobility management function network element, before the mobility management function network element performs step S502B, the method further includes: The second network element obtains the information about the first tag from the first communication apparatus having the reader function, or the second network element obtains information about all tags from the first communication apparatus having the reader function, where the information about all the tags includes the information about the first tag.

S503B: The second network element sends a second message to the first network element, where the second message includes the information about the first tag and the first identifier.

The first identifier is used to determine the target server of the first tag.

Correspondingly, the first network element receives the second message.

In an implementation, based on a case in which the second network element receives the first message from the first network element, the second network element sends the second message to the first network element.

In another implementation, based on a case in which the second network element receives the first message from the mobility management function network element, that the second network element sends a second message to the first network element includes: The second network element sends the second message to the mobility management function network element. Then, the mobility management function network element sends the second message to the first network element.

It needs to be noted that the second network element sends a fourth message to the mobility management function network element, where the fourth message includes the information about the first tag, and the mobility management function network element then sends a second message to the first network element, where the second message includes the information about the first tag and the first identifier.

For example, the second network element is the UE, and the first network element is the NEF network element. The UE network element sends a NAS message (equivalent to the fourth message) to the AMF network element, where the NAS message includes the information about the first tag. The AMF network element sends a data transmission message (equivalent to the second message) to the NEF network element, where the data transmission message includes the information about the first tag and the first identifier.

S504B: The first network element determines the target server of the first tag based on the first identifier.

In an implementation, that the first network element determines the target server of the first tag based on the first identifier includes: The first network element determines the target server of the first tag based on the first identifier and a first correspondence, where the first correspondence includes a correspondence between the first identifier and the target server.

It needs to be noted that the first correspondence may be obtained in the following manner:

The first network element receives control information of at least one server, where each piece of control information includes the first operation identifier and the second tag filter. The first network element may generate the first identifier based on the control information of the at least one target server, and establish a correspondence between the first identifier and the server, namely, a first correspondence. The first correspondence may be stored locally in the first network element, or stored in another network element or device that can perform communication. This is not specifically limited in this application.

It needs to be noted that the first identifier may be information identifying the target server, for example, an address of the target server or an identifier of the target server. For example, the first identifier may be an identifier of the first message, or the first identifier may be an identifier of the first operation instruction. There is a one-to-one correspondence between the identifier of the first message or the identifier of the first operation instruction and the target server. The first identifier is not specifically limited in this application.

S505B: The first network element sends the information about the first tag to the target server.

This implementation is mainly based on the third transmission path shown in FIG. 3C. The second network element in this implementation may be the first communication apparatus (for example, the UE) having the reader function, or may be the mobility management function network element (namely, the AMF network element). When the second network element is the first communication apparatus, the second network element first receives the first message from the first network element (namely, the network exposure function network element) by using the mobility management function network element, and the second network element may then determine the first tag based on the first operation instruction and the second tag filter in the first message, and further send, to the first network element via the mobility management function network element, the second message including the information about the first tag and the first identifier. Finally, the first network element sends the information about the first tag to the target server. When being the mobility management function network element, the second network element may directly receive the first message from the first network element (namely, the network exposure function network element), determine the first tag based on the first operation instruction and the second tag filter in the first message, and then send, to the first network element, the information about the first tag and the first identifier that are read/wrote by the first communication apparatus and that are carried in the second message. Finally, the first network element accurately sends the information about the first tag to the target server based on the first identifier.

The following further describes in detail the communication methods provided in the foregoing solutions of this application by using several specific embodiments.

The following embodiment 1, embodiment 2, and embodiment 3 are specific examples of the communication method shown in FIG. 5A. Embodiment 1 is a specific example of an implementation in the method shown in FIG. 5A. Embodiment 2 is a specific example of another implementation in the method shown in FIG. 5A (Case 1 in step S502A). Embodiment 2 is a specific example of another implementation in the method shown in FIG. 5A (Case 2 in step S502A). The following embodiment 4 and embodiment 5 are specific examples of another communication method shown in FIG. 5B.

### Embodiment 1

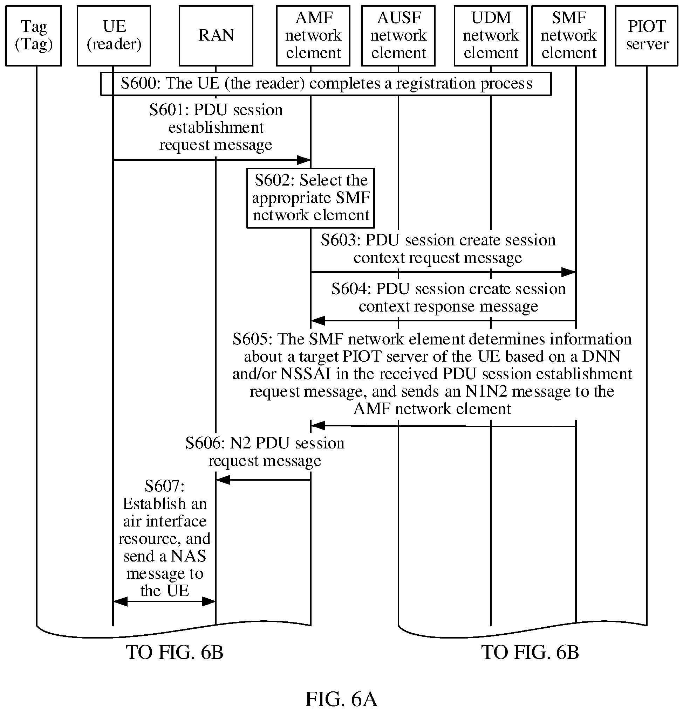

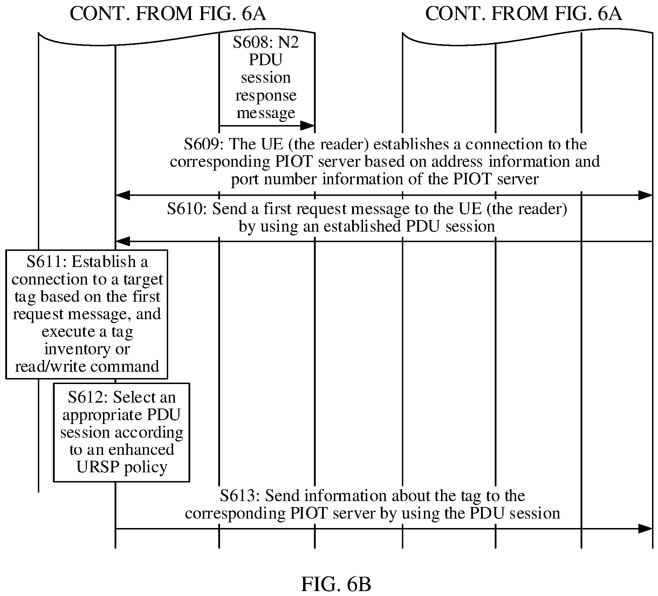

In Embodiment 1, an example in which terminal device UE is used as a reader is used. Based on the first transmission path shown in FIG. 3A, the UE (the reader) manages a tag, and the UE (the reader) establishes a user plane session and transmits information about the tag. Refer to FIG. 6A and FIG. 6B. A specific procedure is as follows.

S600: The UE (the reader) completes a registration process.

For a specific registration procedure performed by the UE (the reader), refer to a conventional technology for implementation. Details are not described herein again.

S601: The UE (namely, the reader) sends a PDU session establishment request message to an AMF network element.

Correspondingly, the AMF network element receives the PDU session establishment request message (equivalent to the first session request message in this application).

In a possible example, the UE (the reader) may alternatively send the PDU session establishment request message to a RAN (for example, a base station), the RAN device (for example, the base station) forwards the PDU session establishment request message to the AMF network element, and the AMF network element receives the PDU session establishment request message from the RAN (for example, the base station).

In a possible example, the PDU session establishment request message may include first indication information, and the first indication information indicates home enterprise information of an accessed tag of the UE. The home enterprise information of the accessed tag of the UE may be but is not limited to a DNN and/or NSSAI; or the first indication information is a DNN and/or NSSAI. The DNN and/or the NSSAI indicate/indicates network information that is of a target enterprise and that the UE requests to establish.

If the UE (namely, the reader) is shared by a plurality of enterprises, PDU session establishment procedures in steps S601 to S608 are sequentially initiated for home enterprises of different accessed tags. Steps S601 to S608 are described in detail by using an example in which a corresponding PDU session (namely, a communication session) is established for one enterprise.

S602: The AMF network element selects an appropriate SMF network element.

In addition to how the AMF network element selects the appropriate SMF network element in a conventional technology, the AMF network element may further assist in selecting the SMF network element based on the first indication information in the PDU session establishment request message (equivalent to the first session request message in this application).

In a possible implementation method, the AMF network element selects the SMF network element that meets the DNN and/or the NSSAI in the first indication information.

S603: The AMF network element sends a PDU session create session context request message to the SMF network element.

Correspondingly, the SMF network element receives the PDU session create session context request message.

In a possible implementation, the PDU session create session context request message carries the DNN and/or the NSSAI of a home enterprise of the accessed tag. The DNN and/or the NSSAI indicate/indicates the network information of the target enterprise that the UE requests to establish.

Optionally, the PDU session create session context request message further carries parameters such as an SUPI (namely, an identifier of the UE), the DNN requested by the UE, and a PDU session ID.

S604: The SMF network element sends a PDU session create session context response message to the AMF network element.

Correspondingly, the AMF network element receives the PDU session create session context response message.

S605: The SMF network element determines information about a target PIOT server of the UE based on the DNN and/or the NSSAI in the received PDU session establishment request message, and sends an N1N2 message to the AMF network element.

In a possible example, the SMF network element may alternatively request to obtain information about a target server of the UE from a PCF network element. The information about the target PIOT server of the UE may include an IP address and/or a port number of the target server.

Correspondingly, the AMF network element receives the N1N2 message, where the N1N2 message carries information such as a tunnel endpoint identifier of a UPF network element (where the information is sent to the RAN device). The N1N2 message further carries the address and port number information of the PIOT server (encapsulated in an N1 SM message and sent to the reader UE). For example, the N1N2 message may be an AMF communication N1N2 message transfer message.

S606: The AMF network element sends an N2 PDU session request message to the RAN.

Correspondingly, the RAN receives the N2 PDU session request message, where the N2 PDU session request message carries a NAS message, and the NAS message carries the address and the port number information of the PIOT server. For example, the NAS message may be a PDU session establishment response message. The NAS message is also from the N1 SM message.

S607: The RAN establishes an air interface resource with the UE (the reader), and sends a NAS message to the UE.

Correspondingly, the UE receives the NAS message (equivalent to the foregoing first response message in this application), where the NAS message carries the address (equivalent to the foregoing first target address information in this application) and the port number information (equivalent to the foregoing first port number information in this application) of the PIOT server.

S608: The RAN sends an N2 PDU session response message to the AMF network element.

Correspondingly, the AMF network element receives the N2 PDU session response message.

Through the foregoing steps S601 to S608, the UE (the reader) establishes a PDU session (PDU Session) of an enterprise. For other different enterprises, the UE (the reader) may establish corresponding PDU sessions with reference to the foregoing steps S601 to S608. Details are not described herein again.

For example, the UE (the reader) establishes a corresponding PDU 1 session through the foregoing steps S601 to S608 for a home enterprise 1 of a tag 1; the UE (the reader) establishes a corresponding PDU 2 session through the foregoing steps S601 to S608 for a home enterprise 2 of a tag 2; and the UE (the reader) establishes a corresponding PDU 3 session through the foregoing steps S601 to S608 for a home enterprise 3 of a tag 3.

In addition, through the foregoing steps, after the UE (the reader) establishes different PDU sessions for different enterprises, the UE separately obtains different address information and different port number information of PIOT servers, that is, obtains address information and port number information of a corresponding PIOT server by establishing a PDU session.

S609: The UE (the reader) establishes a connection to the corresponding PIOT server based on the address information and the port number information of the PIOT server.

For example, the UE (the reader) obtains address information and corresponding port number information of a PIOT 1 server by establishing a PDU 1 session, and the reader UE establishes a connection to the PIOT 1 server based on the address information and the corresponding port number information of the PIOT 1 server. The UE (the reader) obtains address information and corresponding port number information of a PIOT 2 server by establishing a PDU 2 session, and the UE (the reader) establishes a connection to the PIOT 2 server based on the address information and the corresponding port number information of the PIOT 2 server. The UE (the reader) obtains address information and corresponding port number information of a PIOT 3 server by establishing a PDU 3 session, and the UE (the reader) establishes a connection to the PIOT 3 server based on the address information and the corresponding port number information of the PIOT 3 server.

The following describes a process in which an application layer sends a tag inventory or read/write command to the UE (the reader). A specific procedure is as follows.

S610: The PIOT server sends a first request message to the UE (the reader) by using the established PDU session.

Correspondingly, the UE (the reader) receives the first request message (equivalent to the foregoing first request in this application). The first request message includes the tag inventory or read/write command. In addition, the first request message may further include a range of a target tag and a filtering rule.

S611: The UE (the reader) establishes a connection to the target tag based on the first request message, and executes the foregoing tag inventory or read/write command.

Specifically, the UE (the reader) may first perform inventory of the target tag (equivalent to the first tag in this application) based on the tag inventory command. For a process of performing tag inventory, refer to the steps in FIG. 2. Details are not described herein again.

Further, in step S611, the UE (the reader) may read information about the accessed tag. For details about how the UE (the reader) reads the information about the accessed tag, refer to the conventional technology for implementation. Details are not described herein again.

The information about the tag includes but is not limited to an identifier of the tag, such as an electronic product code EPC and a tag identifier TID.

For example, the accessed tag includes a tag 1, a tag 2, and a tag 3, and the UE (the reader) reads information about the tag 1, information about the tag 2, and information about the tag 3.

S612: The UE (the reader) selects an appropriate PDU session according to an enhanced URSP policy.

It should be understood that the UE (the reader) may select the appropriate PDU session according to the enhanced URSP policy, which may be considered as the foregoing first communication session.

The UE (the reader) determines the corresponding appropriate PDU session (equivalent to the communication session in this application) for the accessed tag based on the obtained information about the accessed tag and with reference to the enhanced user equipment route selection policy (a URSP policy) shown in Table 1 (equivalent to the first routing policy in this application).

As shown in Table 1, an additional description about a passive IoT is added to traffic description content in the enhanced URSP policy, include an ID of an enterprise and an ID of a tag, and is used to match and identify different tags. The description about the passive IoT is bound to an address and a port number of a corresponding PIOT server, and is transmitted by using a corresponding PDU session (namely, the first communication session in this application). That is, there is a correspondence between one passive IoT and each of an address and a port number of the PIOT server and the PDU session. Therefore, the UE (the reader) may determine the description about the passive IoT in Table 1 based on information about the tag (the ID of the tag and the ID of the home enterprise of the tag), and may further determine the address and the port number of the PIOT server and the corresponding PDU session that correspond to the description of the passive IoT.

**Table 1**

| Traffic descriptor (Traffic descriptor) | This part defines the traffic descriptor components for the URSP rule | Mandatory (Mandatory) | | |
|---|---|---|---|---|
| (Application descriptors) Application descriptors | It consists of OSId and OSAppId(s) (It consists of OSId and OSAppId(s)) | Optional (Optional) | Yes | UE context (UE context) |
| IP descriptors (IP descriptors) | Destination IP 3 tuples (IP address or IPv6 network prefix, port number, and protocol ID of the protocol above IP) | Optional (Optional) | Yes | UE context (UE context) |
| Passive internet of things descriptors (Passive IoT descriptors) | 2 tuples (enterprise ID and tag ID) | Optional (Optional) | Yes | UE context (UE context) |
| Domain descriptors (Domain descriptors) | Fully qualified domain name FQDN(s) or a regular expression are used as a domain name matching criteria | Optional (Optional) | Yes | UE context (UE context) |
| Non-IP descriptors (Non-IP descriptors) | Descriptors for destination information of non-IP traffic (Descriptor(s) for destination information of non-IP traffic) | Optional (Optional) | Yes | UE context (UE context) |
| Data network name (DNN) | This is matched against the DNN information provided by the application (This is matched against the DNN information provided by the application) | Optional (Optional) | Yes | UE context (UE context) |
| (Connection capabilities) Connection capabilities | This is matched against the information provided by a UE application when it requests a network connection with certain capabilities (This is matched against the information provided by a UE application | Optional (Optional) | Yes | UE context (UE context) |
| Traffic descriptor (Traffic descriptor) | This part defines the traffic descriptor components for the URSP rule | Mandatory (Mandatory) | | |
| | when it requests a network connection with certain capabilities). | | | |

It should be understood that Table 1 is merely used as an example, and the enhanced URSP policy may further include but is not limited to the description content in Table 1.

For example, the UE (the reader) may determine an address and a port number of a corresponding server and the PDU 1 session based on an ID of the tag 1 and an ID of the home enterprise of the tag 1 (or obtains an address and a port number of a server and the PDU 1 session through the foregoing session establishment process). The UE (the reader) determines an address and a port number of a corresponding server and the PDU 2 session based on an ID of the tag 2 and an ID of the home enterprise of the tag 2 (or obtains an address and a port number of a server and the PDU 2 session through the foregoing session establishment process). The UE (the reader) determines an address and a port number of a corresponding server and the PDU 3 session based on an ID of the tag 3 and an ID of the home enterprise of the tag 3 (or obtains an address and a port number of a server and the PDU 3 session through the foregoing session establishment process).

S613: The UE (the reader) sends the information about the tag to the corresponding PIOT server by using the PDU session.

Specifically, the information about the tag may be data of the tag, or the information about the tag may include only the identifier of the tag.

The UE (the reader) sends, based on the address information and the port number of the PIOT server, the information about the tag to the corresponding PIOT server by using the corresponding PDU session and through the corresponding port number.

For example, the UE (the reader) sends, based on the address information and a port number 1 of the PIOT 1 server, data of the tag 1 to the corresponding PIOT 1 server by using the corresponding PDU 1 session and through the corresponding port number 1.

The UE (the reader) sends, based on the address information and a port number 2 of the PIOT 2 server, data of the tag 2 to the corresponding PIOT 2 server by using the corresponding PDU 2 session and through the corresponding port number 2.

The UE (the reader) sends, based on the address information and a port number 3 of the PIOT 3 server, data of the tag 3 to the corresponding PIOT 3 server by using the corresponding PDU 3 session and through the corresponding port number 3.

According to Embodiment 1, when establishing the PDU session, the UE (the reader) carries the DNN and/or the NSSAI corresponding to the home enterprise of the accessed tag (Passive IoT), to assist a core network in identifying and allocating address information and port number information of different servers, so that the UE (the reader) can establish a user plane connection to the passive IoT server. In addition, in Embodiment 1, according to the enhanced URSP policy, the UE (the reader) may further select corresponding appropriate PDU sessions for information about different tags, to route and transmit the information about the different tags.

### Embodiment 2

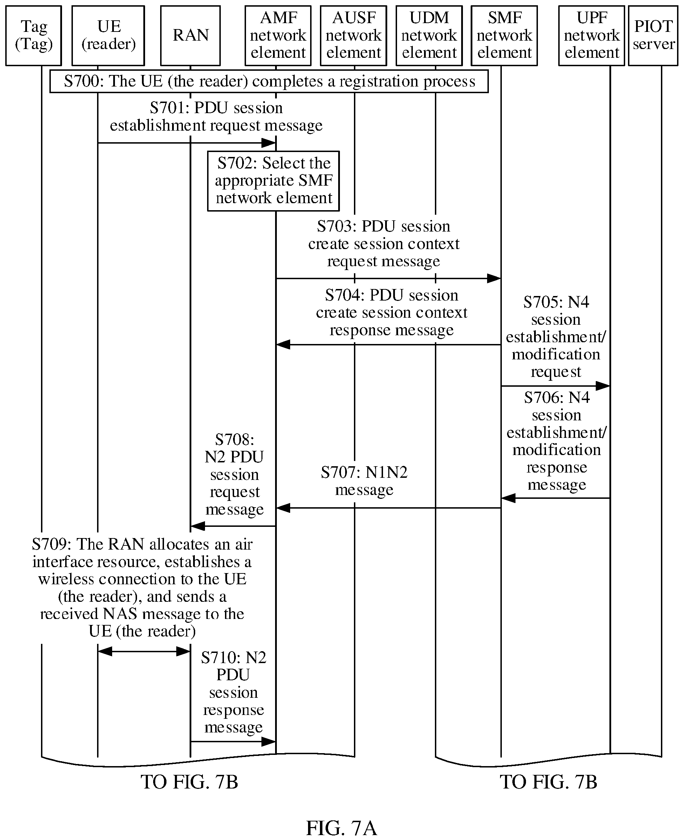

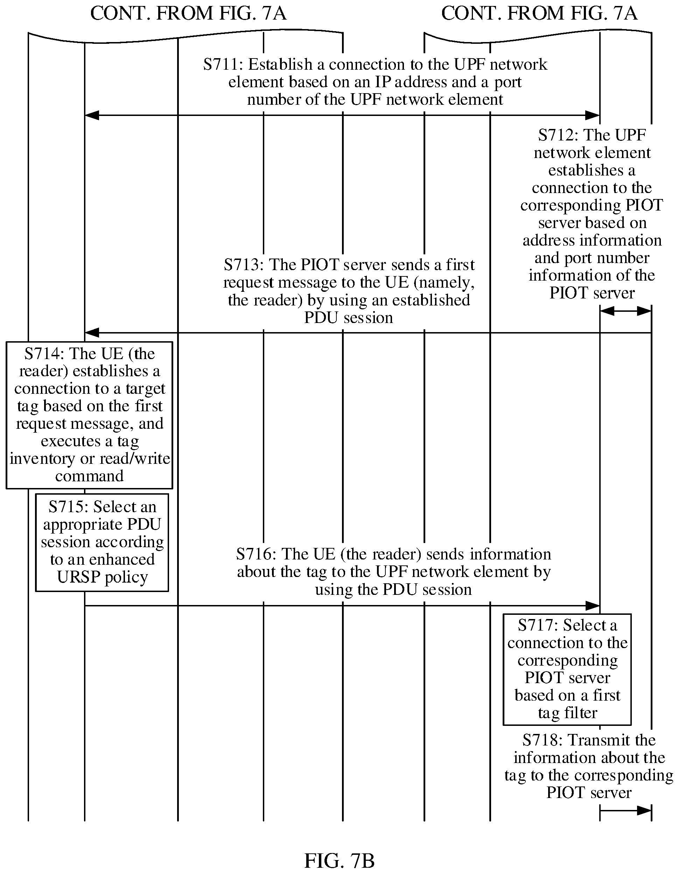

In Embodiment 2, an example in which terminal device UE is used as a reader is used. Based on the second transmission path shown in FIG. 3B, a UPF network element manages a tag, and a user plane session is established via the UPF network element and information about the tag is transmitted. Refer to FIG. 7A and FIG. 7B. A specific procedure is as follows.

S700: The UE (the reader) completes a registration process.

For a specific registration procedure performed by the UE (the reader), refer to a conventional technology for implementation. Details are not described herein again.

S701: The UE (the reader) sends a PDU session establishment request message to an AMF network element.

Correspondingly, the AMF network element receives the PDU session establishment request information (equivalent to the first session request message in this application), where the PDU session establishment request message carries a data network name DNN and/or NSSAI of a home enterprise of the accessed tag.

Specifically, for step S701, refer to step S601. Details are not described herein again.

If the UE (the reader) is shared by a plurality of enterprises, PDU session establishment procedures in steps S701 to S708 are sequentially initiated for home enterprises of different accessed tags. Steps S701 to S708 are described in detail by using an example in which a corresponding PDU session (namely, a communication session) is established for one enterprise.

S702: The AMF network element selects an appropriate SMF network element.

Specifically, for step S702, refer to step S602. Details are not described herein again.

S703: The AMF network element sends a PDU session create session context request message to the SMF network element.

Correspondingly, the SMF network element receives the PDU session create session context request message.

In a possible implementation, the PDU session create session context request message carries the DNN and/or the NSSAI of the home enterprise of the accessed tag. The DNN and/or the NSSAI indicate/indicates the network information of a target enterprise that the UE requests to establish.

Optionally, the PDU session create session context request message further carries parameters such as an identifier of the UE (for example, an SUPI), the data network name DNN requested by the UE, and a PDU session identifier PDU session ID.

Specifically, for step S702, refer to step S602. Details are not described herein again.

S704: The SMF network element sends a PDU session create session context response message to the AMF network element.

Correspondingly, the AMF network element receives the PDU session create session context response message.

S705: The SMF network element initiates an N4 session establishment/modification request to the UPF network element.

Correspondingly, the UPF network element receives the N4 session establishment/modification request (equivalent to the N4 session request message in this application). The N4 session establishment/modification request carries an IP address (equivalent to the third target address information in this application), corresponding port number information (equivalent to the third target address information in this application) of the UE, an IP address (including a fully qualified domain name) (equivalent to the second target address information in this application) and corresponding port number information (equivalent to the second port number information in this application) of a PIOT server, and a first tag filter.

For example, the SMF network element may determine information about a target PIOT server of the UPF network element based on the received DNN and/or IP address. The information about the target PIOT server may include an IP address and/or a port number of the target server. The SMF network element may alternatively request to obtain the information about the target PIOT server from a PCF network element.

The first tag filter identifies a tag. The UPF network element may select a corresponding PIOT server by identifying an identifier of the tag or an enterprise identifier carried in the tag, to send the information about the tag. In this embodiment, the UPF network element may identify the tag based on the first tag filter and determine the target PIOT server for the tag.

S706: The UPF network element sends an N4 session establishment/modification response message to the SMF network element.

The UPF network element sends the N4 session establishment/modification response message to the SMF network element, to feed back an IP address and a port number of the UPF network element to the SMF network element.

S707: The SMF network element sends an N1N2 message to the AMF network element.

Correspondingly, the AMF network element receives the N1N2 message, where the N1N2 message carries the IP address and the port number information of the UPF network element. For example, the N1N2 message may be an AMF network element communication N1N2 message transfer message.

It needs to be noted that the IP address and the port number information of the UPF network element are encapsulated in the N1 SM message, and the information is sent to the UE (the reader).

S708: The AMF network element sends an N2 PDU session request message to a RAN.

Correspondingly, the RAN receives the N2 PDU session request message, where the message carries a NAS message, the NAS message is the foregoing N1 SM message, and the NAS message carries the IP address and the port number information of the UPF network element.

For example, the NAS message may be a PDU session establishment response message.

S709: The RAN allocates an air interface resource, establishes a wireless connection to the UE (the reader), and sends the foregoing received NAS message to the UE (the reader).

Correspondingly, the UE (the reader) receives the NAS message (equivalent to the foregoing second response message in this application), where the NAS message carries the IP address (equivalent to the foregoing second target address information in this application) and the port number information (equivalent to the foregoing second port number information in this application) of the UPF network element.

S710: The RAN sends an N2 PDU session response message to the AMF network element.

Specifically, after the RAN successfully establishes the connection to the UE (the reader), and the UE (the reader) successfully receives the NAS message, the UE (the reader) sends the N2 PDU session response message to the AMF network element.

S711: The UE (the reader) establishes a connection to the UPF network element based on the IP address and the port number of the UPF network element.

Through step S711, a first communication session between the UE (the reader) and the UPF network element may be established.

S712: The UPF network element establishes a connection to the corresponding PIOT server based on the address information and the port number information of the PIOT server.

For example, in the foregoing steps S701 to S705, the UPF network element may receive the IP address and the corresponding port number information of the PIOT server, so that the UPF network element may establish the connection to the PIOT server based on the IP address and the corresponding port number information of the PIOT server. Specifically, for establishing the connection between the UPF network element and the PIOT server, refer to a process of establishing the connection between the UE (the reader) and the PIOT server in step S609. Details are not described herein again.

Therefore, the UPF network element may sequentially obtain IP addresses and corresponding port number information of corresponding PIOT servers with reference to the foregoing steps S701 to S705 for home enterprises of different accessed tags of the UE (namely, the reader), and establish connections to the corresponding PIOT servers. Finally, the UPF network element creates the connections to the different PIOT servers for the home enterprises of the different tags, for subsequent use.

The following describes a process in which an application layer sends a tag inventory or read/write command to the UE (the reader). A specific procedure is as follows.

S713: The PIOT server sends a first request message to the UE (namely, the reader) by using the established PDU session.

Correspondingly, the UE (namely, the reader) receives the first request message (equivalent to the foregoing first request in this application). The first request message includes the tag inventory or read/write command. In addition, the first request message may further include a range of a target tag and a filtering rule.

Step S713 may be mutually referenced with step S610.

S714: The UE (the reader) establishes a connection to the target tag based on the first request message, and executes the foregoing tag inventory or read/write command.

Specifically, the UE (the reader) may first perform inventory of the target tag (equivalent to the first tag in this application) based on the tag inventory command. For a process of performing tag inventory, refer to the steps in FIG. 2. Details are not described herein again.

Further, in step S714, the UE (the reader) may read information about the accessed tag. For details about how the UE (the reader) reads the information about the accessed tag, refer to the conventional technology for implementation. Details are not described herein again.

The information about the tag includes but is not limited to an identifier of the tag, such as an electronic product code EPC and a tag identifier TID.

For example, the accessed tag includes a tag 1, a tag 2, and a tag 3, and the UE (the reader) reads information about the tag 1, information about the tag 2, and information about the tag 3.

Step S714 may be mutually referenced with step S611.

S715: The UE (the reader) selects an appropriate PDU session according to an enhanced URSP policy.

It should be understood that the UE (the reader) may select the appropriate PDU session according to the enhanced URSP policy, which may be considered as the foregoing first communication session.

The UE (the reader) determines a corresponding appropriate PDU session for each accessed tag based on obtained information about the accessed tag and with reference to the enhanced URSP policy (the routing policy) shown in Table 1. It should be noted that, different from that in Embodiment 1, IP descriptors in the enhanced URSP policy in this embodiment are the IP address and the port number of the UPF that are received by the UE, and a corresponding protocol ID.

For example, the UE (the reader) may determine a PDU 1 session based on the obtained information about the accessed tag 1 and with reference to the enhanced URSP policy shown in Table 1. The UE (the reader) may determine a PDU 2 session based on the obtained information about the accessed tag 2 and with reference to the enhanced URSP policy shown in Table 1. The UE (the reader) may determine a PDU 3 session based on the obtained information about the accessed tag 3 and with reference to the enhanced URSP policy shown in Table 1.

Step S715 is the same as step S612, and reference may be made to each other. Details are not described herein again.

S716: The UE (the reader) sends the information about the tag to the UPF network element by using the PDU session.

Correspondingly, the UPF network element receives the information about the tag.

For example, the UE (the reader) transmits the information about the tag 1 to the UPF network element by using the PDU 1 session. The UE (the reader) transmits the information about the tag 2 to the UPF network element by using the PDU 2 session. The UE (the reader) transmits the information about the tag 3 to the UPF network element by using the PDU 3 session.

S717: The UPF network element selects the connection to the corresponding PIOT server based on the first tag filter.

The first tag filter includes the identifier of the tag or a filtering rule of the enterprise identifier carried in the tag, and the information about the target PIOT server corresponding to the corresponding filtering rule, namely, the IP address and the port number of the target PIOT. For example, the UPF network element receives the information about the three tags, and the UPF network element may identify the received information about the three tags by using the first tag filter, and determine that the received information about the three tags is respectively data of the tag 1, data of the tag 2, and data of the tag 3. Further, the UPF network element may determine connections to corresponding PIOT servers for information different tags. To be specific, the UPF network element determines a connection to a PIOT 1 server for the data of the tag 1, determines a connection to a PIOT 2 server for the data of the tag 2, and determines a connection to a PIOT 3 server for the data of the tag 3.

S718: The UPF network element transmits the information about the tag to the corresponding PIOT server.

Specifically, the information about the tag may be data of the tag, or the information about the tag may include only the identifier of the tag.

For example, the UPF network element transmits the data of the tag 1 to the PIOT 1 server through the connection to the PIOT 1 server. The UPF network element transmits the data of the tag 2 to the PIOT 2 server through the connection to the PIOT 2 server. The UPF network element transmits the data of the tag 3 to the PIOT 3 server through the connection to the PIOT 3 server.

According to Embodiment 2, when the UE cannot learn of the address information and the corresponding port number information of the PIOT server, the UE may establish the connection to the UPF network element, and send the information about the tag to the UPF network element. Further, the UPF network element identifies the received information about the tag, and determines the connection to the corresponding PIOT server (that is, routing data) for the information about the tag. Finally, the UPF network element accurately transmits the information about the tag to the corresponding PIOT server through the connection to the corresponding PIOT server.

### Embodiment 3

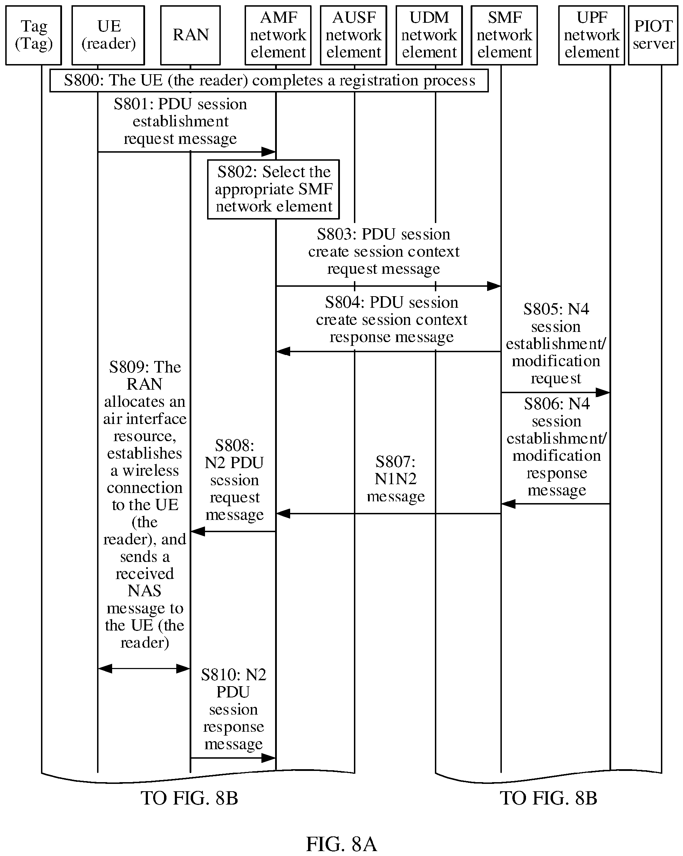

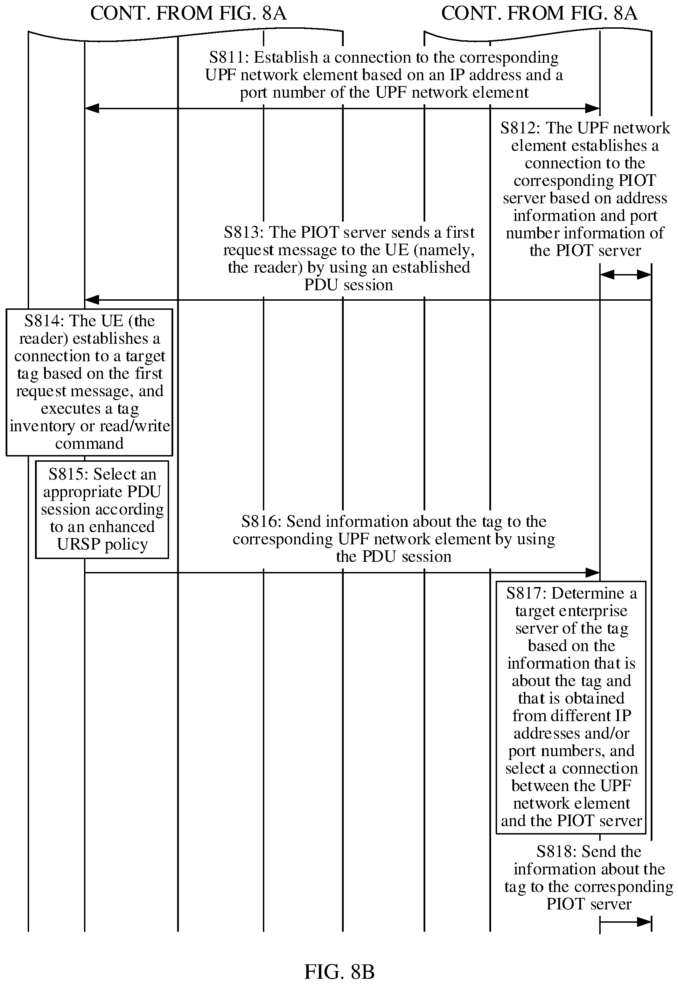

In Embodiment 3, an example in which terminal device UE is used as a reader is used. Based on the second transmission path shown in FIG. 3B, a UPF network element manages a tag, and a user plane session is established via the UPF network element and information about the tag is transmitted. However, in Embodiment 3, a plurality of UPF network elements may be included. In a process of creating a communication session (a Passive IoT session) by the UE (the reader), each communication session may correspond to a different UPF network element, and each communication session finally corresponds to a target PIOT server of a different enterprise. A correspondence between different communication sessions and different target PIOT servers is stored in the UPF network element, and the UPF network element performs tag routing management. Refer to FIG. 8A and FIG. 8B. A specific procedure is as follows.

S800: The UE (the reader) completes a registration process.

For a specific registration procedure performed by the UE (the reader), refer to a conventional technology for implementation. Details are not described herein again.

S801: The UE (namely, the reader) sends a PDU session establishment request message to an AMF network element.

Correspondingly, the AMF network element receives the PDU session establishment request message.

In a possible example, the UE (the reader) may alternatively send the PDU session establishment request message to a RAN device (for example, a base station), the RAN device (for example, the base station) forwards the PDU session establishment request message to the AMF network element, and the AMF network element receives the PDU session establishment request message from the RAN device (for example, the base station).

In a possible example, the PDU session establishment request message may include first indication information, and the first indication information indicates home enterprise information of an accessed tag of the UE. The home enterprise information of the accessed tag of the UE may be but is not limited to a DNN and/or NSSAI; or the first indication information is a DNN and/or NSSAI. The DNN and/or the NSSAI indicate/indicates network information that is of a target enterprise and that the UE requests to establish.

For step S801, refer to the foregoing steps S601 and S701.

If the UE (namely, the reader) is shared by a plurality of enterprises, PDU session establishment procedures in steps S801 to S808 are sequentially initiated for home enterprises of different accessed tags. It may be considered that steps S801 to S808 are described in detail by using an example in which a corresponding PDU session (namely, a communication session) is established for one enterprise.

S802: The AMF network element selects an appropriate SMF network element.

In addition to how the AMF network element selects the appropriate SMF network element in a conventional technology, the AMF network element may further assist in selecting the SMF network element based on the first indication information in the PDU session establishment request message (equivalent to the first session request message in this application).

In a possible implementation method, the AMF network element selects the SMF network element that meets the DNN and/or the NSSAI in the first indication information.

For step S802, refer to the foregoing steps S602 and S702.

S803: The AMF network element sends a PDU session create session context request message to the SMF network element.

Correspondingly, the SMF network element receives the PDU session create session context request message.

In a possible implementation, the PDU session create session context request message carries the DNN and/or the NSSAI of the home enterprise of the accessed tag. The DNN and/or the NSSAI indicate/indicates the network information of a target enterprise that the UE requests to establish.

Optionally, the PDU session create session context request message further carries parameters such as an identifier of the UE (for example, an SUPI), the data network name DNN requested by the UE, and a PDU session identifier PDU session ID.

For step S804, refer to the foregoing steps S604 and S704.

S804: The SMF network element sends a PDU session create session context response message to the AMF network element.

Correspondingly, the AMF network element receives the PDU session create session context response message.

S805: The SMF network element sends an N4 session establishment/modification request to the corresponding UPF network element based on the received DNN.

Correspondingly, the corresponding UPF network element receives the N4 session establishment/modification request (equivalent to the N4 session request message in this application). The N4 session establishment/modification request carries an IP address and/or port number information of the UE, an IP address (including a fully qualified domain name) of the PIOT server, and corresponding port number information.

For example, the SMF network element determines an IP address (including a fully qualified domain name) and corresponding port number information of an appropriate PIOT server based on a received DNN of a home enterprise of a tag 1. If the SMF network element determines the IP address (including the fully qualified domain name) and the corresponding port number information of the PIOT 1 server, the SMF network element sends an N4 session establishment/modification request to a corresponding UPF (1) network element, where the N4 session establishment/modification request carries the IP address (including the fully qualified domain name) and the corresponding port number information of the PIOT 1 server.

It needs to be noted that, in step S805, for only the DNN and/or the NSSAI of the home enterprise of one tag, the SMF network element feeds back the IP address and the corresponding port number information of the corresponding PIOT server to the corresponding UPF network element. Therefore, for a DNN and/or NSSAI of a home enterprise of another tag accessed by the UE, the SMF network element may feed back an IP address and corresponding port number information of a corresponding PIOT server to a corresponding UPF network element with reference to this manner.

UPF network elements corresponding to different tags may be the same or different. If UPF network elements corresponding to the foregoing different communication sessions are the same (that is, IP addresses of the UPF network elements are the same), port numbers corresponding to the UPF network elements are different. If UPF network elements corresponding to the foregoing different communication sessions are different (that is, IP addresses of the UPF network elements are different), port numbers corresponding to the UPF network elements may be the same. In summary, the different communication sessions may be identified by using the IP addresses and the port numbers of the UPF network elements.

For example, the SMF network element may separately feed back, for DNNs and/or NSSAI of home enterprises of tags 1, 2, and 3 accessed by the UE, IP addresses and corresponding port number information of corresponding PIOT 1 servers to a corresponding UPF (1) network element, a corresponding UPF (2) network element, and a corresponding UPF (3) network element. That is, the SMF network element determines the different UFP network elements (that is, the IP addresses of the UFP network elements are different) for different tags accessed by the UE, the different UPF network elements correspond to different port numbers, and the different UFP network elements correspond to different communication sessions.

Alternatively, the SMF network element may determine, for DNNs and/or NSSAI of home enterprises of tags 1, 2, and 3 accessed by the UE, to feed back IP addresses of corresponding PIOT 1 servers and corresponding port number information to a same UPF (1) network element. However, the SMF network element determines, for the tags 1, 2, and 3 accessed by the UE, that corresponding port numbers of the UPF (1) network element may be different, to be specific, the tag 1 corresponds to a port number 1 of the UPF (1) network element, and the tag 2 corresponds to a port number 2 of the UPF (1) network element, the tag 3 is corresponding to a port number 3 of the UPF (1) network element, and the port number 1, the port number 2, and the port number 3 are all corresponding to different communication sessions.

S806: The UPF network element sends an N4 session establishment/modification response message to the SMF network element.

For example, after receiving the N4 session establishment/modification request, the UPF (1) network element sends an N4 session establishment/modification response message to the SMF network element, to feed back an IP address and a port number of the UPF (1) network element to the SMF network element, namely, the IPF address and the corresponding port number of the UPF (1) network element.

S807: The SMF network element sends an N1N2 message to the AMF network element.

Correspondingly, the AMF network element receives the N1N2 message, where the N1N2 message carries the IP address and the port number information of the UPF network element. For example, the N1N2 message may be an AMF network element communication N1N2 message transfer message.

For example, the SMF network element sends an N1N2 message to the AMF network element based on the received DNN and/or NSSAI of the home enterprise of the tag 1, where the N1N2 message carries an IP address and port number 1 information of the UPF (1) network element. The SMF network element sends an N1N2 message to the AMF network element based on the received DNN and/or NSSAI of the home enterprise of the tag 2, where the N1N2 message carries an IP address and port number 2 information of the UPF (2) network element. The SMF network element sends an N1N2 message to the AMF network element based on the received DNN and/or NSSAI of the home enterprise of the tag 3, where the N1N2 message carries an IP address and port number 3 information of the UPF (3) network element. Alternatively, the SMF network element sends an N1N2 message to the AMF network element based on the received DNN and/or NSSAI of the home enterprise of the tag 1, where the N1N2 message carries an IP address and port number 1 information of the UPF (1) network element. The SMF network element sends an N1N2 message to the AMF network element based on the received DNN and/or NSSAI of the home enterprise of the tag 2, where the N1N2 message carries an IP address and port number 2 information of the UPF (1) network element. The SMF network element sends an N1N2 message to the AMF network element based on the received DNN and/or NSSAI of the home enterprise of the tag 3, where the N1N2 message carries an IP address and port number 3 information of the UPF (1) network element.

S808: The AMF network element sends an N2 PDU session request message to the RAN.

Correspondingly, the RAN receives the N2 PDU session request message, where the N2 PDU session request message carries a NAS message, the NAS message is the foregoing N1 SM message, and the NAS message carries the IP address and the port number information of the UPF network element that are received by the AMF network element.

For example, the NAS message may be a PDU session establishment response message.

S809: The RAN allocates an air interface resource, establishes a wireless connection to the UE (the reader), and sends the foregoing received NAS message to the UE (the reader).

Correspondingly, the UE (the reader) receives the NAS message (which may be equivalent to the second response message in this application), where the NAS message carries the IP address (equivalent to the foregoing second target address information in this application) and the port number information (equivalent to the foregoing second port number information in this application) of the UPF network element.

S810: The RAN sends an N2 PDU session response message to the AMF network element.

Specifically, after the RAN successfully establishes the connection to the UE (the reader), and the UE (the reader) successfully receives the NAS message, the UE (the reader) sends the N2 PDU session response message to the AMF network element.

S811: The UE (the reader) establishes a connection to the corresponding UPF network element based on the IP address and the port number of the UPF network element.

Refer to step S811. Connections between a plurality of UE (readers) and the UPF network element may be established.

For example, the UE (namely, the reader) establishes a connection to the corresponding UPF (1) network element based on the IP address and the port number 1 of the UPF (1) network element. The UE (namely, the reader) establishes a connection to the corresponding UPF (2) network element based on the IP address and the port number 2 of the UPF (2) network element. The UE (namely, the reader) establishes a connection to the corresponding UPF (3) network element based on the IP address and the port number 3 of the UPF (3) network element. Alternatively, the UE (namely, the reader) establishes a connection to the corresponding UPF (1) network element based on the IP address and the port number 1 of the UPF (1) network element. The UE (namely, the reader) establishes a connection to the corresponding UPF (1) network element based on the IP address and the port number 2 of the UPF (1) network element. The UE (namely, the reader) establishes a connection to the corresponding UPF (1) network element based on the IP address and the port number 3 of the UPF (1) network element.

S812: The UPF network element establishes a connection to the corresponding PIOT server based on the address information and the port number information of the PIOT server.

Through the foregoing step S805, the different UPF network elements may obtain the address information and the port number information of the corresponding PIOT servers for the home enterprises of the corresponding accessed tags, and establish connections to the corresponding PIOT servers based on the obtained address information and port number information of the corresponding PIOT servers.

For example, the UPF (1) network element establishes the connection to the PIOT 1 server based on the IP address of the UPF (1) network element, the port number 1 of the UPF (1) network element, and the IP address and the corresponding port number 1 of the PIOT 1 server. The UPF (2) network element establishes the connection to the PIOT 2 server based on the IP address of the UPF (2) network element, the port number 2 of the UPF (2) network element, and the IP address and the corresponding port number 2 of the PIOT 2 server. The UPF (3) network element establishes the connection to the PIOT 3 server based on the IP address of the UPF (3) network element, the port number 3 of the UPF (3) network element, and the IP address and the corresponding port number 3 information of the PIOT 3 server.

Alternatively, the UPF (1) network element establishes the connection to the PIOT 1 server based on the IP address of the UPF (1) network element, the port number 1 of the UPF (1) network element, and the IP address information and the corresponding port number 1 of the PIOT 1 server. The UPF (1) network element establishes the connection to the PIOT 2 server based on the IP address of the UPF (1) network element, the port number 2 of the UPF (1) network element, and the IP address and the corresponding port number 2 of the PIOT 2 server. The UPF (1) network element further establishes the connection to the PIOT 3 server based on the IP address of the UPF (1) network element, the port number 3 of the UPF (1) network element, and the IP address information and the corresponding port number 3 of the PIOT 3 server.

Therefore, refer to step S812. Connections between a plurality of UPF network elements and a plurality of PIOT servers may be correspondingly established, or connections between one UPF network element and a plurality of PIOT servers may be correspondingly established.

In addition, an association relationship (or a correspondence) between connections between the UE (the reader) and the plurality of UPF network elements and the connections between the plurality of UPF network elements and the plurality of PIOT servers may be established. To be specific, when the plurality of UFP network elements are included, a connection between the UE (the reader) and one of the plurality of UPF network elements corresponds to a connection between the UPF network element and one of the plurality of PIOT servers. For example, a connection between UE and a UPF (x) network element corresponds to a connection between the UPF (x) network element and a PIOT (x) server, where x is a variable positive integer.

Alternatively, an association relationship (or a correspondence) between a connection between the UE (the reader) and one UPF network element and the connections between the UPF network element and the plurality of PIOT servers may be established. To be specific, when only one UFP network element is included, a connection between the UE (the reader) and the UPF network element corresponds to a connection between the UPF network element and one of the plurality of PIOT servers. For example, a connection between UE and a UPF (1) corresponds to a connection between the UPF (1) and a PIOT (x) server, where x is a variable positive integer.

The following describes a process in which an application layer sends a tag inventory or read/write command to the UE (the reader). A specific procedure is as follows.

S813: The PIOT server sends a first request message to the UE (namely, the reader) by using the established PDU session.

Correspondingly, the UE (namely, the reader) receives the first request message (equivalent to the foregoing first request in this application). The first request message includes the tag inventory or read/write command. In addition, the first request message may further include a range of a target tag and a filtering rule.

Step S813 may be mutually referenced with the foregoing step S610 and step S713.

S814: The UE (the reader) establishes a connection to the target tag based on the first request message, and executes the foregoing tag inventory or read/write command.

Specifically, the UE (the reader) may first perform inventory of the target tag (equivalent to the first tag in this application) based on the tag inventory command. For a process of performing tag inventory, refer to the steps in FIG. 2. Details are not described herein again.

Further, in step S814, the UE (the reader) may read information about the accessed tag.

The information about the tag includes but is not limited to an identifier of the tag, such as an electronic product code EPC and a tag identifier TID.

For example, the accessed tag includes a tag 1, a tag 2, and a tag 3, and the UE (the reader) reads information about the tag 1, information about the tag 2, and information about the tag 3.

Step S814 may be mutually referenced with the foregoing step S611 and step S714.

S815: The UE (the reader) selects an appropriate PDU session according to an enhanced URSP policy.

The UE (the reader) determines a corresponding appropriate PDU session for each accessed tag based on obtained information about the accessed tag and with reference to the enhanced URSP policy (the routing policy) shown in Table 1. Different from Embodiment 1, IP descriptors of the foregoing URSP policy are an IP address and a port number of the UPF and a protocol ID.

For example, the UE (the reader) determines a PDU 1 session based on the information about the accessed tag 1 and with reference to the enhanced URSP policy shown in Table 1. The UE (the reader) determines a PDU 2 session based on information about the accessed tag 2 and with reference to the enhanced URSP policy shown in Table 1, and the UE (the reader) determines a PDU 3 session based on information about the accessed tag 3 and with reference to the enhanced URSP policy shown in Table 1.

It needs to be noted that, step S815 is the same as step S715, and reference may be made to each other. Details are not described herein again.

S816: The UE (the reader) sends the information about the tag to the corresponding UPF network element by using the PDU session.

Correspondingly, the UPF network element receives the information about the tag.

For example, the UE (the reader) sends the information about the tag 1 to the UPF (1) network element by using the PDU 1 session; the UE (the reader) sends the information about the tag 2 to the UPF (2) network element by using the PDU 2 session; and the UE (the reader) sends the information about the tag 3 to the UPF (3) network element by using the PDU 3 session.

Alternatively, the UE (the reader) sends the information about the tag 1 to the UPF (1) network element by using the PDU 1 session; the UE (the reader) sends the information about the tag 2 to the UPF (1) network element by using the PDU 2 session; and the UE (the reader) sends the information about the tag 3 to the UPF (1) network element by using the PDU 3 session.

S817: The UPF network element determines a target enterprise server of the tag based on the information about the tag obtained from the different IP addresses and/or port numbers, and selects a connection between the UPF network element and the PIOT server.

Specifically, the UPF network element may determine the connection between the UPF network element and the PIOT server based on the association relationship established in step S812.

For example, if the UE (the reader) sends the information about the tag 1 to the UPF (1) network element in step S816, the UPF (1) network element selects the connection between the UPF network element (1) and the PIOT 1 server based on the association relationship in step S817. If the UE (the reader) sends the information about the tag 2 to the UPF (2) network element in step S816, the UPF (2) network element selects the connection between the UPF network element (2) and the PIOT 2 server based on the association relationship in step S817. If the UE (the reader) sends the information about the tag 3 to the UPF (3) network element in step S816, the UPF (3) network element selects the connection between the UPF network element (3) and the PIOT 3 server based on the association relationship in step S817.

Alternatively, if the UE (the reader) sends the information about the tag 1 to the UPF (1) network element in step S816, the UPF (1) network element selects the connection between the UPF network element (1) and the PIOT 1 server based on the association relationship in step S817. If the UE (the reader) alternatively sends the information about the tag 2 to the UPF (1) network element in step S816, the UPF (1) network element selects the connection between the UPF network element (1) and the PIOT 2 server based on the association relationship in step S817. If the UE (the reader) sends the information about the tag 3 to the UPF (1) network element in step S816, the UPF (1) network element selects the connection between the UPF network element (1) and the PIOT 3 server based on the association relationship in step S817.

S818: The UPF network element sends the information about the tag to the corresponding PIOT server.

The information about the tag may be data of the tag, or the information about the tag may include only the identifier of the tag.

For example, a case of a plurality of UPF network elements is included: If selecting the connection between the UPF network element (1) and the PIOT 1 server through step S817, in step S818, the UPF (1) network element transmits the information about the tag 1 to the PIOT 1 server through the connection between the UPF network element (1) and the PIOT 1 server. If selecting the connection between the UPF network element (2) and the PIOT 2 server through step S817, in step S818, the UPF (2) network element transmits the information about the tag 2 to the PIOT 2 server through the connection between the UPF network element (2) and the PIOT 2 server. If selecting the connection between the UPF network element (3) and the PIOT 3 server through step S817, in step S818, the UPF (3) network element transmits the information about the tag 3 to the PIOT 3 server through the connection between the UPF network element (3) and the PIOT 3 server.

A case of only one UPF network element, namely, the UPF (1) network element is included: If selecting the connection between the UPF network element (1) and the PIOT 1 server through step S817, in step S818, the UPF (1) network element transmits the information about the tag 1 to the PIOT 1 server through the connection between the UPF network element (1) and the PIOT 1 server. If selecting the connection between the UPF network element (1) and the PIOT 2 server through step S817, in step S818, the UPF (1) network element transmits the information about the tag 2 to the PIOT 2 server through the connection between the UPF network element (1) and the PIOT 2 server. If selecting the connection between the UPF network element (1) and the PIOT 3 server through step S817, in step S818, the UPF (1) network element transmits the information about the tag 3 to the PIOT 3 server through the connection between the UPF network element (1) and the PIOT 3 server.

According to Embodiment 3, when the UE cannot learn of the address information and the corresponding port number information of the PIOT server, the UE may request the DNNs/NSSAI of the home enterprises of the different tags, and establish the different communication sessions via the UPF. Then, the UE selects the first communication session according to the enhanced URSP policy, and sends the information about the target tag to the corresponding UPF network element, and further, the corresponding UPF network element determines the corresponding PIOT server for the tag based on the IP address and the port number, and accurately transmits information about the tag to the PIOT server.

### Embodiment 4

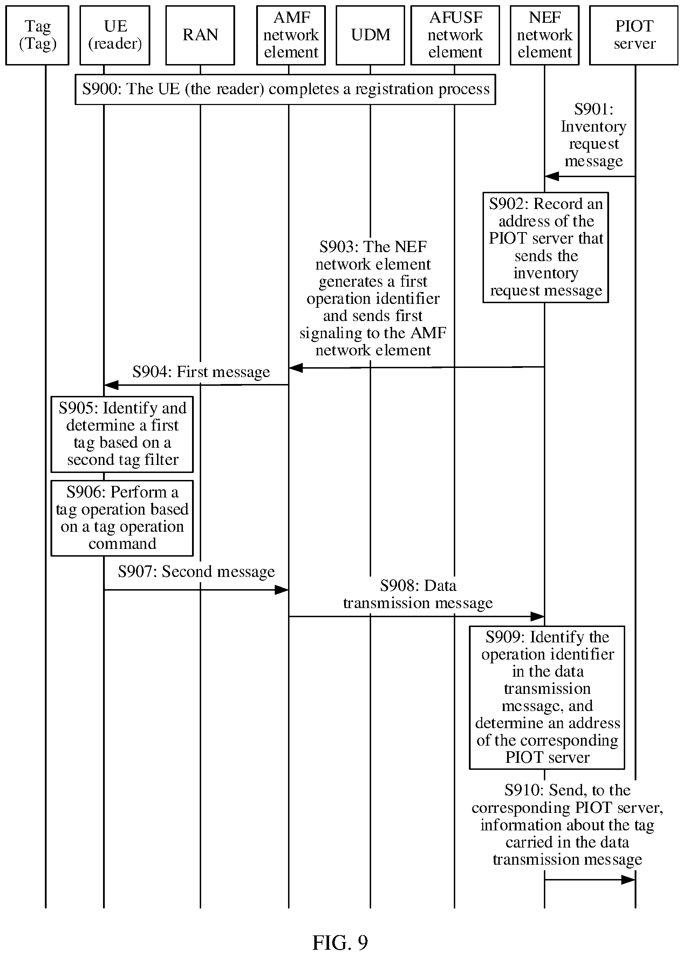

In Embodiment 4, an example in which terminal device UE is used as a reader is used. Based on the third transmission path shown in FIG. 3C, the UE (the reader) mainly manages a tag, and transmits the tag through a control plane channel. That is, a PIOT server sends an instruction to an AMF network element via an NEF network element. Refer to FIG. 9. A specific procedure is as follows.

S900: The UE (the reader) completes a registration procedure.

For the specific registration procedure performed by the UE (the reader), refer to a conventional technology for implementation. Details are not described herein again.

S901: The PIOT server sends an inventory request message to an NEF network element.

Correspondingly, the NEF network element (equivalent to the first network element in this application) receives the inventory request message, where the inventory request message carries information such as a tag operation command, a second tag filter (such as an inventory area, an inventory type, and an inventory rule), and a reporting trigger event (such as an inventory periodicity, a new tag access event, and tag leaving).

S902: The NEF network element records an address of the PIOT server that sends the inventory request message.

Specifically, the NEF network element separately records, for each received inventory request message, an address of a PIOT server (namely, an application server of an enterprise) from which the inventory request message is sent.

S903: The NEF network element generates an operation identifier and sends first signaling to the AMF network element.

For example, the first signaling may be a first message.

Specifically, the operation identifier (relative to the first identifier in this application) may be used by the NEF network element to uniquely determine the first signaling. The NEF network element may further determine, by determining the first signaling, the inventory request message that triggers the first signaling, to determine recorded address information of the PIOT server.

Correspondingly, the AMF network element receives the first signaling, where the first signaling carries the operation identifier and the information included in the foregoing inventory request message, namely, the information such as the tag operation command, the second tag filter (the inventory area), and the reporting trigger event. Because the first signaling is triggered by the foregoing inventory request message, the foregoing operation identifier may further identify the first message.

S904: The AMF network element sends a first message to the UE (the reader).

For example, the first message may be a NAS message.

Correspondingly, the UE (equivalent to the second network element in this application) receives the first message. The first message includes the first signaling. Therefore, the first message also includes the information such as the operation identifier (an identifier of the first message), the tag operation command, the second tag filter (the inventory area), and the reporting trigger event.

S905: The UE (the reader) identifies and determines a first tag based on the second tag filter.

The first tag may be a group of tags that meet a tag filter rule, or may be a tag identified by a specified tag. This is not limited in this embodiment of this application.

For example, for a tag accessed by a UE (reader) side, a tag ID (1) is matched for the tag based on the second tag filter, and a corresponding operation identifier (1) is identified based on the tag (1).

It should be understood that the second tag filter may be configured to match the corresponding ID for the accessed tag, and the second tag filter may be further configured to determine the corresponding operation identifier based on the tag ID. For example, the second tag filter may include a correspondence between the tag ID and the operation identifier. That is, one tag ID corresponds to one operation identifier, or a plurality of tag IDs correspond to one operation identifier. In addition, one operation identifier may be used to determine a unique target server, but one target server may correspond to a plurality of operation identifiers. That is, a same target server may generate different operation identifiers on the NEF network element in a plurality of tag inventory requests.

S906: The UE (the reader) performs a tag operation based on the tag operation command.

S907: The UE (the reader) sends a second message to the AMF network element.

For example, the second message may be an uplink NAS transport message.

Correspondingly, the AMF network element receives the second message, where the second message carries information about the accessed tag and the corresponding operation identifier.

For example, the uplink NAS transport message carries data (or information) about the tag (1), and the operation identifier (1) corresponding to the tag (1).

S908: The AMF network element sends a data transmission message to the NEF network element.

For example, the data transmission message may alternatively be a second message.

Correspondingly, the NEF network element receives the data transmission message, where the data transmission message carries information about the accessed tag and the corresponding operation identifier (namely, the identifier of the first message).

The information about the tag may be data of the tag, or the information about the tag may include only an identifier of the tag.

S909: The NEF network element identifies the operation identifier in the data transmission message, and determines the address of the corresponding PIOT server.

In step S903, the NEF network element has recorded the first message in advance, and has generated the unique operation identifier for the first message, that is, has recorded a correspondence between the operation identifier and the first message. When determining that the data transmission message is associated with the first message, the NEF network element may further determine the address information of the PIOT server based on the first message and the inventory request message that triggers the first message. Therefore, when receiving, via the AMF network element, the operation identifier fed back by the UE (the reader), the NEF network element may determine the address of the corresponding PIOT server.

S910: The NEF network element sends, to the corresponding PIOT server, the information about the tag carried in the data transmission message.

The NEF network element sends the information about the tag to the corresponding PIOT server based on the address of the PIOT server.

According to Embodiment 4, a connection between the tag and the PIOT server (namely, the application server of the enterprise) is established based on a control plane, and the reader performs tag identification and management. In addition, because the solutions in Embodiment 4 are that the information about the tag is transmitted through the control plane, and therefore a session establishment procedure is not needed, so that a signaling procedure can be reduced, and a latency needed for transmitting the information about the tag can also be reduced.

### Embodiment 5

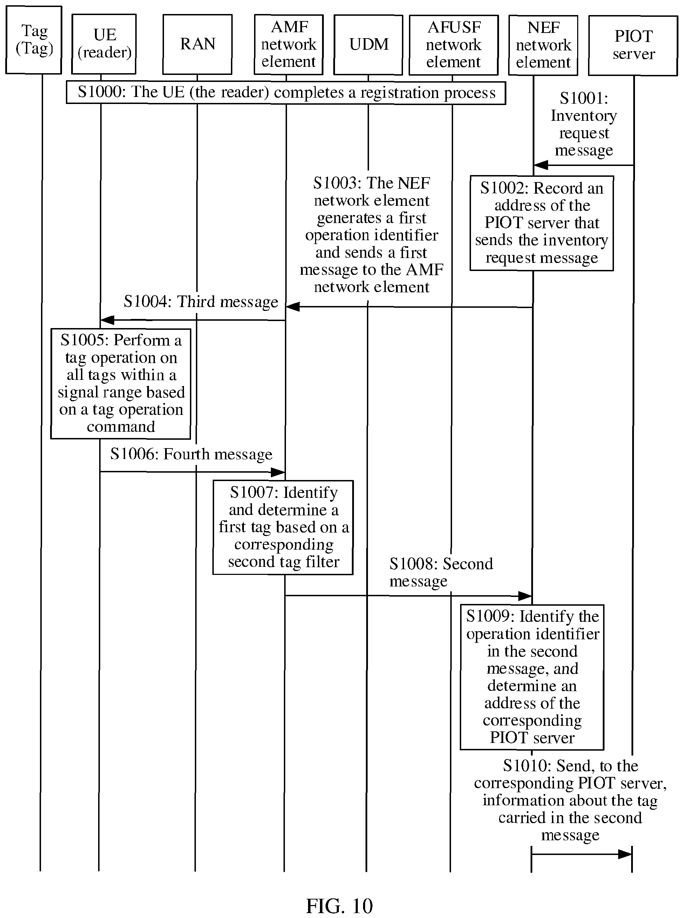

In Embodiment 5, an example in which terminal device UE is used as a reader is used. Based on the third transmission path shown in FIG. 3C, the UE (the reader) mainly manages a tag, and transmits the tag through a control plane channel. That is, a PIOT server sends an instruction to an AMF network element via an NEF network element. However, in Embodiment 5, the UE (the reader) may send information (information) about all accessed tags to the AMF network element (equivalent to the second network element in this application), and the AMF network element replaces the UE (the reader) to perform tag management and identification. Refer to FIG. 10. A specific procedure of transmitting information about a tag is as follows.

S1000: The UE (the reader) completes a registration procedure.

For the specific registration procedure performed by the UE (the reader), refer to a conventional technology for implementation. Details are not described herein again.

S1001: The PIOT server sends an inventory request message to an NEF network element.

Correspondingly, the NEF network element (equivalent to the first network element in this application) receives the inventory request message, where the inventory request message carries information such as a tag operation command, a second tag filter (such as an inventory area, an inventory type, and an inventory rule), and a reporting trigger event (such as an inventory periodicity, a new tag access event, and tag leaving).

Step S1001 may be mutually referenced with step S901.

S1002: The NEF network element records an address of the PIOT server that sends the inventory request message.

Specifically, the NEF network element may separately record, for each received inventory request message, an address of a PIOT server (namely, an application server of an enterprise) from which the inventory request message is sent.

Step S1002 may be mutually referenced with step S902.

S1003: The NEF network element generates an operation identifier and sends a first message to the AMF network element.

Specifically, the operation identifier (equivalent to the first identifier in this application) may be used by the NEF network element to uniquely determine the first message. The NEF network element may further determine, by determining the first message, the inventory request message that triggers the first message, to determine recorded address information of the PIOT server.

Correspondingly, the AMF network element (equivalent to the second network element in this application) receives the first message, where the first message carries the operation identifier and the information included in the foregoing inventory request message, namely, the information such as the tag operation command, the second tag filter (the inventory area), and the reporting trigger event. Because the first message is triggered by the foregoing inventory request message, the foregoing operation identifier may further identify the first message.

Step S1003 may be mutually referenced with step S903.

S1004: The AMF network element sends a third message to the UE (the reader).

For example, the third message may be a NAS message.

Correspondingly, the UE (the reader) receives the third message, where the third message carries the information such as the tag operation command and the reporting trigger event in the first message.

S1005: The UE (the reader) performs a tag operation on all tags within a signal range based on the tag operation command.

S1006: The UE (the reader) sends a fourth message to the AMF network element.

For example, the fourth message may be an uplink NAS message.

The UE (the reader) performs the tag operation on all the tags within the signal range based on the tag operation command, includes an operation result (namely, information about the collected tags) in the fourth message (for example, the uplink NAS message), and sends the fourth message to the AMF network element.

S1007: The AMF network element identifies and determines a first tag based on the corresponding second tag filter.

The first tag may be a group of tags that meet a tag filter rule, or may be a tag identified by a specified tag.

After identifying and determining the first tag, the AMF network element may further include a corresponding operation identifier in information about the first tag.

S1008: The AMF network element sends a second message to the NEF network element.

For example, the second message may be a data transmission message.

Correspondingly, the NEF network element receives the second message, where the second message carries information about the accessed tag and the corresponding operation identifier.

S1009: The NEF network element identifies the operation identifier in the second message, and determines the address of the corresponding PIOT server.

In step S1003, the NEF network element has recorded the first message in advance, and has generated the unique operation identifier for the first message, that is, has recorded a correspondence between the operation identifier and the first message. When determining that second message is associated with the first message, the NEF network element may further determine the address information of the corresponding PIOT server based on the first message and the inventory request message that triggers the first message. Therefore, when receiving, via the AMF network element, the operation identifier fed back by the UE (the reader), the NEF network element may determine the address of the corresponding PIOT server.

S 1010: The NEF network element sends, to the corresponding PIOT server, the information about the tag carried in the second message.

The information about the tag may be data of the tag, or the information about the tag may include only an identifier of the tag.

The NEF network element sends the information about the tag to the corresponding PIOT server based on the address of the PIOT server.

According to Embodiment 5, a connection between the UE (the reader) and the PIOT server (namely, the application server of the enterprise) is established based on a control plane, that is, the information about the tag is transmitted through the control plane. Therefore, a session establishment procedure is not needed, so that a signaling procedure can be reduced, and a latency needed for transmitting the information about the tag can also be reduced. In addition, the UE (the reader) may send, to the AMF network element, the information about the tag collected based on the operation command, and the AMF network element replaces the UE (the reader) to perform tag management and identification, to reduce a capability requirement of the reader (that is, the reader does not need to store and process the information related to the second tag filter).

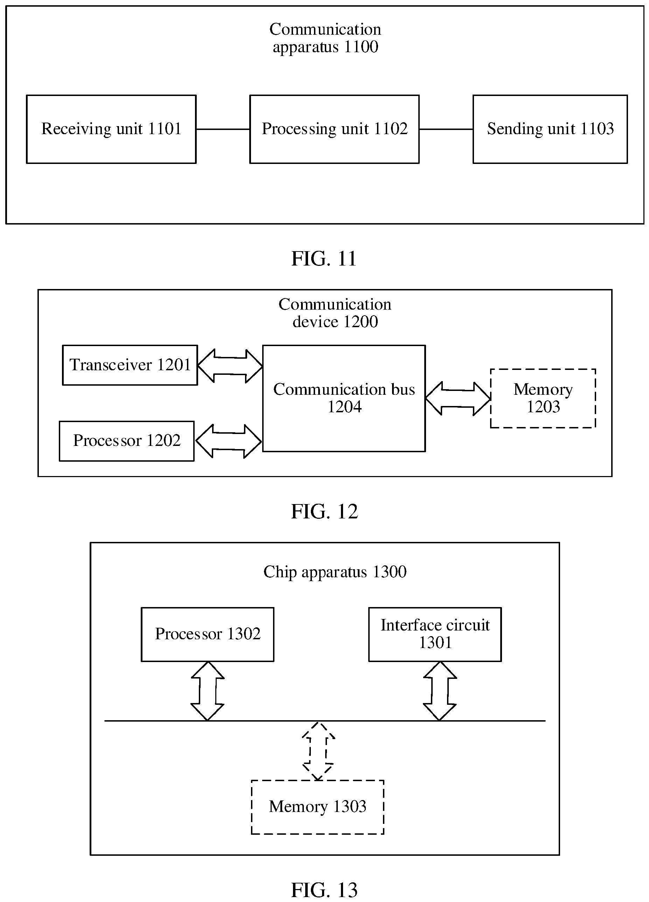

Based on a same technical concept, an embodiment of this application provides a communication apparatus. The communication apparatus may include a one-to-one corresponding module or unit for performing the methods/operations/steps/actions described in the first communication apparatus in the first method embodiment. The module or the unit may be a hardware circuit, or may be software, or may be implemented by a combination of a hardware circuit and software. The apparatus may have a structure shown in FIG. 11.

As shown in FIG. 11, the communication apparatus 1100 may include a receiving unit 1101, a processing unit 1102, and a sending unit 1103. The following describes the units in detail. The receiving unit 1101 is configured to receive a first request, where the first request indicates the first communication apparatus to obtain information about a first tag. The receiving unit 1101 is further configured to obtain the information about the first tag based on the first request, where the information about the first tag includes an identifier of the first tag. The processing unit 1102 is configured to determine a first communication session based on the identifier of the first tag, where the first communication session is used to transmit the information about the first tag. The sending unit 1103 is configured to send the information about the first tag by using the first communication session.

Optionally, the communication apparatus 1100 may further include a storage unit (not shown in FIG. 11). The storage unit may be configured to store a computer program, instructions, information, and/or the like for performing the methods/operations/steps/actions described in the communication apparatus.

In a possible implementation, when determining the first communication session based on the identifier of the first tag, the processing unit 1102 is specifically configured to determine the first communication session from at least one communication session based on the identifier of the first tag and first routing policy information, where the first routing policy information includes a correspondence between the identifier of the first tag and an identifier of the first communication session.

In a possible implementation, before the receiving unit 1101 receives the first request, the processing unit 1102 is further configured to: establish at least one communication session, where the at least one communication session includes the first communication session; and establish at least one piece of routing policy information, where each piece of routing policy information includes a correspondence between a corresponding tag and an identifier of a communication session.

In a possible implementation, when establishing the first communication session, the processing unit 1102 is specifically configured to:
send a first session request message via the sending unit 1103, where the first session request message includes first indication information, and the first indication information indicates home enterprise information of the first tag; receive a first response message via the receiving unit 1101, where the first response message is used to respond to the first session request message, the first response message includes first target address information and/or first port number information, and the first target address information and/or the first port number information are/is determined based on the first indication information; and establish the first communication session based on the first target address information and/or the first port number information, where the first target address information and/or the first port number information are/is used to determine a target server, and the target server is a server of a home enterprise.

In a possible implementation, when sending the information about the first tag by using the first communication session, the sending unit 1103 is specifically configured to send the information about the first tag to the target server by using the first communication session.

In a possible implementation, when establishing the first communication session, the processing unit 1102 is specifically configured to:
send a second session request message via the sending unit 1103, where the second session request message includes second indication information, and the second indication information indicates home enterprise information of the first tag; receive a second response message via the receiving unit 1101, where the second response message is used to respond to the second session request message, the second response message includes second target address information and/or second port number information, and the second target address information and/or the second port number information are/is determined based on the second indication information; and establish the first communication session based on the second target address information and/or the second port number information, where the second target address information and/or the second port number information are/is used to determine a first user plane function network element, and the first user plane function network element is a user plane network element that provides a service for a home enterprise.

In a possible implementation, when sending the information about the first tag by using the first communication session, the sending unit 1103 is specifically configured to send the information about the first tag to the first user plane function network element by using the first communication session.

Based on a same technical concept, an embodiment of this application provides a communication apparatus. The communication apparatus may include a one-to-one corresponding module or unit for performing the methods/operations/steps/actions described in the first user plane function network element in the first method embodiment. The module or the unit may be a hardware circuit, or may be software, or may be implemented by a combination of a hardware circuit and software. The apparatus may also have a structure shown in FIG. 11. The communication apparatus 1100 may include a receiving unit 1101, a processing unit 1102, and a sending unit 1103. The receiving unit 1101 is configured to receive information about a first tag and first information, where the first information is used to determine a target server of the first tag. The processing unit 1102 is configured to determine the target server of the first tag based on the first information. The sending unit 1103 is configured to send the information about the first tag to the target server.

Optionally, the communication apparatus 1100 may further include a storage unit (not shown in FIG. 11). The storage unit may be configured to store a computer program, instructions, information, and/or the like for performing the methods/operations/steps/actions described in the first user plane function network element.

In a possible implementation, when receiving the first information, the receiving unit 1101 is specifically configured to receive an N4 session request message, where the N4 session request message includes the first information, the first information indicates a first tag filter, and the first tag filter is used to match a corresponding server based on an identifier of a tag.

When determining the target server of the first tag based on the first information, the processing unit 1102 may be specifically configured to: determine the first tag filter based on the first information; and match the target server of the first tag based on an identifier of the first tag and by using the first tag filter.

In a possible implementation, when receiving the information about the first tag, the receiving unit 1101 may be specifically configured to receive the information about the first tag from the first communication apparatus.

When receiving the first information, the receiving unit 1101 is specifically configured to receive an N4 session request message, where the N4 session request message includes the first information, and the first information indicates address information of the first communication apparatus and/or third port number information for the first communication apparatus to send the information about the first tag.

When determining the target server of the first tag based on the first information, the processing unit 1102 may be specifically configured to: determine the address information and/or the third port number information of the first communication apparatus based on the first information; and determine the target server of the first tag based on the address information and the third port number information of the first communication apparatus, and first mapping information, where the first mapping information includes a correspondence between address information and/or port number information of the first communication apparatus and an identifier of a server.

In a possible implementation, when receiving the first information, the receiving unit 1101 may be specifically configured to receive an N4 session request message, where the N4 session request message includes the first information, and the first information indicates fourth port number information for the first user plane function network element to receive the information about the first tag.

When determining the target server of the first tag based on the first information, the processing unit 1102 may be specifically configured to: determine, based on the first information, the fourth port number information for the first user plane function network element to receive the information about the first tag; and determine the target server of the first tag based on the fourth port number information and second mapping information, where the second mapping information includes a correspondence between port number information of the first user plane function network element and an identifier of a server.

In a possible implementation, when receiving the first information, the receiving unit 1101 may be specifically configured to receive an N4 session request message, where the N4 session request message includes the first information, and the first information indicates address information of the target server and/or fifth port number information for receiving the information about the first tag on the target server, where the address information and/or the fifth port number information of the target server are/is determined based on second indication information, the second indication information indicates home enterprise information of the first tag, and the second indication information is carried in a second session request message sent by a first communication apparatus.

When determining the target server of the first tag based on the first information, the processing unit 1102 may be specifically configured to: determine the address information and/or the fifth port number information of the target server based on the first information; and determine the target server based on the address information and/or the fifth port number information of the target server.

Based on a same technical concept, an embodiment of this application provides a communication apparatus. The communication apparatus may include a one-to-one corresponding module or unit for performing the methods/operations/steps/actions described in the first network element (for example, the network exposure function network element) in the second method embodiment. The module or the unit may be a hardware circuit, or may be software, or may be implemented by a combination of a hardware circuit and software.

The apparatus may also have a structure shown in FIG. 11. The communication apparatus 1100 may include a receiving unit 1101, a processing unit 1102, and a sending unit 1103. The receiving unit 1101 is configured to receive a second message, where the second message includes information about a first tag and a first identifier, and the first identifier is used to determine a target server of the first tag. The processing unit 1102 is configured to determine the target server of the first tag based on the first identifier. The sending unit 1103 is configured to send the information about the first tag to the target server.

Optionally, the communication apparatus 1100 may further include a storage unit (not shown in FIG. 11). The storage unit may be configured to store a computer program, instructions, information, and/or the like for performing the methods/operations/steps/actions described in the first network element.

In a possible implementation, when determining the target server of the first tag based on the first identifier, the processing unit 1102 is specifically configured to determine the target server of the first tag based on the first identifier and a first correspondence, where the first correspondence includes a correspondence between the first identifier and the target server.

In a possible implementation, before the receiving unit 1101 receives the second message, the sending unit 1103 is further configured to send a first message to a second network element, where the first message includes a first operation instruction, a second tag filter, and the first identifier, the first operation instruction indicates the second network element to obtain an identifier of at least one tag, and the second tag filter is used to determine information about a corresponding tag based on identifiers of different tags.

Based on a same technical concept, an embodiment of this application provides a communication apparatus. The communication apparatus may include a one-to-one corresponding module or unit for performing the methods/operations/steps/actions described in the second network element in the second method embodiment. The module or the unit may be a hardware circuit, or may be software, or may be implemented by a combination of a hardware circuit and software.

The apparatus may also have a structure shown in FIG. 11. The communication apparatus 1100 may include a receiving unit 1101, a processing unit 1102, and a sending unit 1103. The receiving unit 1101 is configured to receive a first message, where the first message includes a first operation instruction, a second tag filter, and a first identifier, where the first operation instruction indicates the second network element to obtain an identifier of at least one tag, the second tag filter is used to determine a corresponding tag based on identifiers of different tags, and the first identifier is used to determine a target server of a first tag. The processing unit 1102 is configured to match the second tag filter based on the first operation instruction and an identifier of the first tag, to obtain the first tag. The sending unit 1103 is configured to send a second message, where the second message includes the information about the first tag and the first identifier.

Optionally, the communication apparatus 1100 may further include a storage unit (not shown in FIG. 11). The storage unit may be configured to store a computer program, instructions, information, and/or the like for performing the methods/operations/steps/actions described in the second network element.

In a possible implementation, when receiving the first message, the receiving unit 1101 may be specifically configured to receive the first message from a mobility management network element. When sending the second message, the sending unit 1103 may be specifically configured to sending, by the second network element, the second message to the mobility management network element.

In a possible implementation, when receiving the first message, the receiving unit 1101 may be specifically configured to receive the first message from a first network element. When sending the second message, the sending unit 1103 may be specifically configured to send the second message to the first network element.

Based on a same inventive concept, an embodiment of this application further provides a communication device. The communication device uses steps performed by the first communication apparatus in the methods provided in the embodiments corresponding to in FIG. 5A, and FIG. 6A and FIG. 6B to FIG. 8A and FIG. 8B, and may be a device the same as the communication apparatus 1100 shown in FIG. 11. Refer to FIG. 12. The communication device 1200 includes a transceiver 1201, a processor 1202, and a memory 1203. The transceiver 1201, the processor 1202, and the memory 1203 are connected through a communication bus 1204, to implement data exchange.

The communication bus 1204 may be a peripheral component interconnect (peripheral component interconnect, PCI for short) bus, an extended industry standard architecture (extended industry standard architecture, EISA for short) bus, or the like. The communication bus 1204 may be classified into an address bus, a data bus, a control bus, and the like. For ease of representation, only one bold line is used to represent the bus in FIG. 12, but this does not mean that there is only one bus or only one type of bus.

It should be understood that the transceiver 1201 in the communication device 1200 includes functions of the receiving unit 1101 and the sending unit 1103 in the communication apparatus 1100. The transceiver 1201 is configured to support the communication apparatus 1100 in receiving and sending information, data, and the like with the first user plane function network element in the foregoing embodiments. The memory 1203 is configured to store program code and data of the communication device 1200. The processor 1202 is configured to invoke the program code and the data stored in the memory 1203, to perform a processing process of the first communication apparatus in the methods shown in FIG. 5A and FIG. 6A and FIG. 6B to FIG. 8A and FIG. 8B, and/or another process of the technology described in this application.

In addition, the communication device 1200 may further include another interface, for example, a fiber link interface, an Ethernet interface, a microwave link interface, or a copper line interface, to implement interaction between the communication device 1200 and another device (for example, an access network device or a policy control network element).

Optionally, the processor 1202 may be a central processing unit, an ASIC, an FPGA, or a CPLD.

It needs to be noted that the communication device 1200 shown in FIG. 12 includes only one transceiver 1201, one processor 1202, and one memory 1203. During actual implementation, there may be one or more transceivers 1201, processors 1202, and memories 1203.

Similarly, it is noted that the communication device 1200 shown in FIG. 12 may alternatively implement the methods performed by the first user plane function network element in the methods provided in the embodiments corresponding to FIG. 5A and FIG. 6A and FIG. 6B to FIG. 8A and FIG. 8B, or may implement the methods performed by the first network element in the methods provided in the embodiments corresponding to FIG. 5B, FIG. 9, and FIG. 10, or may implement the methods performed by the second network element in the methods provided in the embodiments corresponding to FIG. 5B, FIG. 9, and FIG. 10. The communication device 1200 shown in FIG. 12 may alternatively be a device the same as the communication apparatus 1100 shown in FIG. 11. Therefore, for an implementation of the communication device 1200 that is not described in detail, refer to related descriptions in the methods provided in the embodiments corresponding to FIG. 5A, FIG. 5B, and FIG. 6A and FIG. 6B to FIG. 10, or refer to related descriptions in the communication device 1200 shown in FIG. 12. Details are not described herein again.

FIG. 13 is a diagram of an apparatus structure of a chip according to an embodiment of this application. The chip 1300 includes an interface circuit 1301 and one or more processors 1302. Optionally, the chip 1300 may further include a bus.

The processor 1302 may be an integrated circuit chip and has a signal processing capability. During implementation, steps of the foregoing eyeball tracking methods may be completed by using a hardware integrated logical circuit in a processor 1302 or instructions in a form of software. The processor 1302 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods and the steps that are disclosed in embodiments of this application. The general-purpose processor may be a microprocessor, or the processor may be any conventional processor, or the like.

The interface circuit 1301 may be configured to send or receive data, instructions, or information. The processor 1302 may process the data, the instructions, or other information received through the interface circuit 1301, and send, through the interface circuit 1301, information obtained through processing.

Optionally, the chip further includes a memory 1303. The memory 1303 may include a read-only memory and a random access memory, and provide operation instructions and data for the processor. A part of the memory 1303 may further include a non-volatile random access memory (NVRAM).

Optionally, the memory stores an executable software module or a data structure, and the processor may perform a corresponding operation by invoking operation instructions (where the operation instructions may be stored in an operating system) stored in the memory.

Optionally, the chip may be used in the first communication apparatus in embodiments of this application. Optionally, the interface circuit 1301 may be configured to output an execution result of the processor 1302. For the communication method provided in one or more embodiments of this application, refer to the foregoing embodiments. Details are not described herein again.

It needs to be noted that functions respectively corresponding to the interface circuit 1301 and the processor 1302 may be implemented by using a hardware design, or may be implemented by using a software design, or may be implemented by using a combination of software and hardware. This is not limited herein.

Based on a same concept as that in the foregoing method embodiments, an embodiment of this application further provides a computer-readable storage medium. The computer-readable storage medium stores some instructions. When the instructions are invoked and executed by a computer, the computer may be enabled to complete the method in any one of the foregoing method embodiments or the possible designs of the foregoing method embodiments. In this embodiment of this application, the computer-readable storage medium is not limited. For example, the computer-readable storage medium may be a RAM (random access memory, random access memory) or a ROM (read-only memory, read-only memory).

Based on a same concept as that in the foregoing method embodiments, this application further provides a computer program product. When being invoked and executed by a computer, the computer program product may complete the method in the method embodiments and any possible design of the foregoing method embodiments.

Based on a same concept as that in the foregoing method embodiments, this application further provides a chip. The chip may include a processor and an interface circuit, to complete the method in the foregoing method embodiments and any possible implementation of the method embodiments. "Coupling" means that two components are joined directly or indirectly to each other, and the combination may be fixed or movable. Such combination may allow flowing liquid, electrical, electrical or other type of signal to communicate between the two components.

It needs to be noted that "at least one" in embodiments of this application includes one or more, and "a plurality of" means two or more than two. In addition, it needs to be understood that in description of this application, terms such as "first" and "second" are merely used for distinguishing and description, but should not be understood as indicating or implying relative importance, or should not be understood as indicating or implying a sequence.

Terms used in the following embodiments are merely intended to describe specific embodiments, but are not intended to limit this application. The terms "one", "the", "the foregoing", "this", and "the one" of singular forms used in this specification and the appended claims of this application are also intended to include expressions such as "one or more", unless otherwise specified in the context clearly. It should be further understood that, in embodiments of this application, "one or more" means one or more than two (including two); and "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects.

Reference to "an embodiment", "some embodiments", or the like described in this specification means that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In embodiments of this application, module division is an example, is merely logical function division, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

An embodiment of this application provides a computer-readable storage medium storing a computer program. The computer program includes instructions for performing the foregoing method embodiments.

An embodiment of this application provides a computer program product including instructions. When the instructions are run on a computer, the computer is enabled to perform the foregoing method embodiments.

In embodiments of this application, module division is an example, is merely logical function division, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

Based on the descriptions of the foregoing implementations, a person skilled in the art may clearly understand that embodiments of this application may be implemented by hardware, firmware or a combination thereof. When this application is implemented by software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium that can be accessed by the computer. Examples of the computer-readable medium may include but are not limited to: a RAM, a ROM, an electrically erasable programmable read-only memory (electrically erasable programmable read-only memory, EEPROM), a compact disc read-only memory (compact disc read-Only memory, CD-ROM) or another optical disc storage, a disk storage medium or another disk storage device, or any other medium that can be configured to carry or store expected program code in an instruction or data structure form and can be accessed by the computer. In addition, any connection may be appropriately defined as a computer-readable medium. For example, if software is transmitted from a website, a server, or another remote source by using a coaxial cable, an optical fiber and optical cable, a twisted pair, a digital subscriber line (digital subscriber line, DSL), or wireless technologies such as infrared, radio, and microwave, the coaxial cable, the optical fiber and optical cable, the twisted pair, the DSL, or the wireless technologies such as infrared, radio, and microwave are included in a definition of a medium to which the coaxial cable, the optical fiber and optical cable, the twisted pair, the DSL, or the wireless technologies such as the infrared ray, the radio, and the microwave belong. For example, a disk (disk) and a disc (disc) used in embodiments of this application include a compact disc (compact disc, CD), a laser disc, an optical disc, a digital video disc (digital video disc, DVD), a floppy disk and a Blu-ray disc. The disk usually copies data by a magnetic means, and the disc copies data optically by a laser means. The foregoing combination should also be included in the protection scope of the computer-readable medium.

In summary, the foregoing descriptions are merely embodiments of this application, and are not intended to limit the protection scope of this application. Any modification, equivalent substitution, and improvement made based on the disclosure of this application shall fall within the protection scope of this application.

## Claims

1. A communication method, comprising:
receiving, by a first communication apparatus, a first request, wherein the first request indicates the first communication apparatus to obtain information about a first tag;
obtaining, by the first communication apparatus, the information about the first tag based on the first request, wherein the information about the first tag comprises an identifier of the first tag;
determining, by the first communication apparatus, a first communication session based on the identifier of the first tag, wherein the first communication session is used to transmit the information about the first tag; and
sending, by the first communication apparatus, the information about the first tag by using the first communication session.

2. The method according to claim 1, wherein the determining, by the first communication apparatus, a first communication session based on the identifier of the first tag comprises:
determining, by the first communication apparatus, the first communication session from at least one communication session based on the identifier of the first tag and first routing policy information, wherein the first routing policy information comprises a correspondence between the identifier of the first tag and an identifier of the first communication session.

3. The method according to claim 1 or 2, wherein before the receiving, by a first communication apparatus, a first request, the method further comprises:
establishing, by the first communication apparatus, at least one communication session, wherein the at least one communication session comprises the first communication session; and
establishing, by the first communication apparatus, at least one piece of routing policy information, wherein each piece of routing policy information comprises a correspondence between a corresponding tag and an identifier of a communication session.

4. The method according to claim 3, wherein the establishing, by the first communication apparatus, the first communication session comprises:
sending, by the first communication apparatus, a first session request message, wherein the first session request message comprises first indication information, and the first indication information indicates home enterprise information of the first tag;
receiving, by the first communication apparatus, a first response message, wherein the first response message is used to respond to the first session request message, the first response message comprises first target address information and/or first port number information, and the first target address information and/or the first port number information are/is determined based on the first indication information; and
establishing, by the first communication apparatus, the first communication session based on the first target address information and/or the first port number information, wherein the first target address information and/or the first port number information are/is used to determine a target server, and the target server is a server of a home enterprise.

5. The method according to claim 4, wherein the sending, by the first communication apparatus, the information about the first tag by using the first communication session comprises:
sending, by the first communication apparatus, the information about the first tag to the target server by using the first communication session.

6. The method according to claim 3, wherein the establishing, by the first communication apparatus, the first communication session comprises:
sending, by the first communication apparatus, a second session request message, wherein the second session request message comprises second indication information, and the second indication information indicates home enterprise information of the first tag;
receiving, by the first communication apparatus, a second response message, wherein the second response message is used to respond to the second session request message, the second response message comprises second target address information and/or second port number information, and the second target address information and/or the second port number information are/is determined based on the second indication information; and
establishing, by the first communication apparatus, the first communication session based on the second target address information and/or the second port number information, wherein the second target address information and/or the second port number information are/is used to determine a first user plane function network element, and the first user plane function network element is a user plane network element that provides a service for a home enterprise.

7. The method according to claim 6, wherein the sending, by the first communication apparatus, the information about the first tag by using the first communication session comprises:
sending, by the first communication apparatus, the information about the first tag to the first user plane function network element by using the first communication session.

8. A communication method, comprising:
receiving, by a first user plane function network element, information about a first tag and first information, wherein the first information is used to determine a target server of the first tag;
determining, by the first user plane function network element, the target server of the first tag based on the first information; and
sending, by the first user plane function network element, the information about the first tag to the target server.

9. The method according to claim 8, wherein the receiving, by a first user plane function network element, first information comprises:
receiving, by the first user plane function network element, an N4 session request message, wherein the N4 session request message comprises the first information, the first information indicates a first tag filter, and the first tag filter is used to match a corresponding server based on an identifier of a tag; and
the determining, by the first user plane function network element, the target server of the first tag based on the first information comprises:
determining, by the first user plane function network element, the first tag filter based on the first information; and
matching, by the first user plane function network element, the target server of the first tag based on an identifier of the first tag by using the first tag filter.

10. The method according to claim 8, wherein the receiving, by a first user plane function network element, information about a first tag comprises:
receiving, by the first user plane function network element, the information about the first tag from a first communication apparatus;
the receiving, by a first user plane function network element, first information comprises:
receiving, by the first user plane function network element, an N4 session request message, wherein the N4 session request message comprises the first information, and the first information indicates address information of the first communication apparatus and/or third port number information for the first communication apparatus to send the information about the first tag; and
the determining, by the first user plane function network element, the target server of the first tag based on the first information comprises:
determining, by the first user plane function network element, the address information and/or the third port number information of the first communication apparatus based on the first information; and
determining, by the first user plane function network element, the target server of the first tag based on the address information and the third port number information of the first communication apparatus, and first mapping information, wherein the first mapping information comprises a correspondence between address information and/or port number information of the first communication apparatus and an identifier of a server.

11. The method according to claim 8, wherein the receiving, by a first user plane function network element, first information comprises:
receiving, by the first user plane function network element, an N4 session request message, wherein the N4 session request message comprises the first information, and the first information indicates fourth port number information for the first user plane function network element to receive the information about the first tag; and
the determining, by the first user plane function network element, the target server of the first tag based on the first information comprises:
determining, by the first user plane function network element based on the first information, the fourth port number information for the first user plane function network element to receive the information about the first tag; and
determining, by the first user plane function network element, the target server of the first tag based on the fourth port number information and second mapping information, wherein the second mapping information comprises a correspondence between port number information of the first user plane function network element and an identifier of a server.

12. The method according to claim 8, wherein the receiving, by a first user plane function network element, first information comprises:
receiving, by the first user plane function network element, an N4 session request message, wherein the N4 session request message comprises the first information, and the first information indicates address information of the target server and/or fifth port number information for the target server to receive the information about the first tag, wherein the address information and/or the fifth port number information of the target server are/is determined based on second indication information, the second indication information indicates home enterprise information of the first tag, and the second indication information is carried in a second session request message sent by a first communication apparatus; and
the determining, by the first user plane function network element, the target server of the first tag based on the first information comprises:
determining, by the first user plane function network element, the address information and/or the fifth port number information of the target server based on the first information; and
determining, by the first user plane function network element, the target server based on the address information and/or the fifth port number information of the target server.

13. A communication method, comprising:
receiving, by a first network element, a second message, wherein the second message comprises information about a first tag and a first identifier, and the first identifier is used to determine a target server of the first tag;
determining, by the first network element, the target server of the first tag based on the first identifier; and
sending, by the first network element, the information about the first tag to the target server.

14. The method according to claim 13, wherein the determining, by the first network element, the target server of the first tag based on the first identifier comprises:
determining, by the first network element, the target server of the first tag based on the first identifier and a first correspondence, wherein the first correspondence comprises a correspondence between the first identifier and the target server.

15. The method according to claim 13, wherein before the receiving, by a first network element, a second message, the method further comprises:
sending, by the first network element, a first message to a second network element, wherein the first message comprises a first operation instruction, a second tag filter, and the first identifier, the first operation instruction indicates the second network element to obtain an identifier of the first tag from an identifier of at least one tag based on the first identifier, and the second tag filter is used to determine information about a corresponding tag based on identifiers of different tags.

16. A communication method, comprising:
receiving, by a second network element, a first message, wherein the first message comprises a first operation instruction, a second tag filter, and a first identifier, wherein the first operation instruction indicates the second network element to obtain an identifier of at least one tag, the second tag filter is used to determine information about a corresponding tag based on identifiers of different tags, and the first identifier is used to determine a target server of a first tag;
obtaining, by the second network element, an identifier of the first tag based on the first operation instruction and the first identifier, and matching the second tag filter based on the identifier of the first tag, to obtain information about the first tag; and
sending, by the second network element, a second message, wherein the second message comprises the information about the first tag and the first identifier.

17. The method according to claim 16, wherein the receiving, by a second network element, a first message comprises:
receiving, by the second network element, the first message from a mobility management function network element; and
the sending, by the second network element, a second message comprises:
sending, by the second network element, the second message to the mobility management function network element.

18. The method according to claim 16, wherein the receiving, by a second network element, a first message comprises:
receiving, by the second network element, the first message from a first network element; and
the sending, by the second network element, a second message comprises:
sending, by the second network element, the second message to the first network element.

19. A communication apparatus, comprising a unit or a module configured to perform the method according to any one of claims 1 to 7, or comprising a unit or a module configured to perform the method according to any one of claims 8 to 12.

20. A communication apparatus, comprising a unit or a module configured to perform the method according to any one of claims 13 to 15, or comprising a unit or a module configured to perform the method according to any one of claims 16 to 18.

21. A communication apparatus, comprising a processor, wherein the processor is configured to read a program from a memory and run the program, to implement the method according to any one of claims 1 to 7 or the method according to any one of claims 8 to 12.

22. A communication apparatus, comprising a processor, wherein the processor is configured to read a program from a memory and run the program, to implement the method according to any one of claims 13 to 15 or the method according to any one of claims 16 to 18.

23. A communication system, comprising a first communication apparatus configured to perform the method according to any one of claims 1 to 7, and a first user plane function network element configured to perform the method according to any one of claims 8 to 12.

24. A communication system, comprising a first network element configured to perform the method according to any one of claims 13 to 15, and a second network element configured to perform the method according to any one of claims 16 to 18.

25. A computer program product, comprising a computer program, wherein when the computer program is executed by a communication apparatus, the method according to any one of claims 1 to 18 is implemented.

26. A computer-readable storage medium, wherein the storage medium stores a computer program or instructions, and when the computer program or the instructions are executed by a communication apparatus, the method according to any one of claims 1 to 18 is implemented.
